# EUROPEAN PATENT SPECIFICATION

(11) **EP 3 984 415 B1**
(45) Date of publication and mention of the grant of the patent: **12.02.2025**
(21) Application number: 20202153.1
(22) Date of filing: 15.10.2020
(51) Int. Cl.: A47F 5/08

(54) **A DISPLAY SYSTEM FOR HYDROTHERMAL SANITARY COMPONENTS AND ASSOCIATED METHOD**
ANZEIGESYSTEM FÜR HYDROTHERMALE SANITÄRKOMPONENTEN UND ZUGEHÖRIGES VERFAHREN
SYSTÈME D'AFFICHAGE POUR COMPOSANTS SANITAIRES HYDROTHERMIQUES ET PROCÉDÉ ASSOCIÉ

(43) Date of publication of application: 20.04.2022
(73) Proprietor: Gessi S.P.A., 13037 Serravalle Sesia VC (IT)
(72) Inventor: Gessi, Gian Luca, 13037 Serravalle Sesia (IT)
(74) Representative: PGA S.p.A., Milano, Succursale di Lugano

(56) References cited:
- EP-A1- 3 420 857
- WO-A1-00/54634
- AT-A1- 511 371
- DE-U1- 202018 103 050
- KR-B1- 100 979 679
- US-A- 2 733 113
- US-A1- 2014 319 988

## Description

### Field of the disclosure

The present disclosure refers to the field of displaying systems for objects, and in detail concerns a display kit including a display system for hydrothermal sanitary components.

### Background

Today's bathrooms comprise several sanitary devices or articles - such as sinks, toilets, bidets, showers, bathtubs - and accessories - such as water and hot water distribution or heating articles like towel heaters, boilers or faucets. These devices are also known with the name of hydrothermal sanitary components, devices or articles.

In many cases the evolution of these articles and accessories moved from simple and traditionally designed articles and accessories to design articles and design accessories, which led the producing firms to the possibility of realizing very particular configurations of items, with a peculiar aesthetic appearance.

Typically, users tend to choose, for their bathrooms, sanitary articles produced by the same Firm, in order to provide a uniform aesthetic appearance throughout the bathroom.

In the past, when designing a bathroom configuration, those articles were placed without considering the overall aesthetic appearance of the overall assembly. In recent years, interior designers and even traditional users paid more attention to the spatial distribution of these devices or articles, in particular the global aesthetic effect thereby provided.

The Applicant noticed that the more the items involve particular shapes or designs, the more it is difficult to arrange them according to the right configuration to provide the right aesthetic appearance to the user.

In very recent years, interior designing, or environment simulation, software programs have been developed to help designers and users for simulating the aesthetic appearance of items to be arranged within a room. These software programs that can provide for very accurate virtual rendering of items arranged in a confined space, but they cannot give the user a really complete aesthetic impression that the items arranged in the bathroom have in the real environment.

Moreover such systems are suitable for remotely simulating a room environment, but are less suitable for live presentations in show rooms and shops.

The scope of the present disclosure is to provide a kit and method helping to solve the aforementioned drawbacks, and in detail contributing to allow the user to have a precise simulation of how the real installation of the chosen hydrothermal sanitary component would appear in a real bathroom. Documents DE202018103050U1, WO00/54634A1, KR100979679B1 and US2733113A disclose relevant prior art.

### Summary

According to the present invention, said object is achieved by a display kit having the characteristics set out in claim 1, use claim 10 and method claim 11. Preferred features and aspects of the invention are set out in the dependent claims.

According to a first aspect is herewith disclosed display kit including a display system (1, 1') for hydrothermal sanitary components (10a-10d), comprising:
at least a first device or module (1), comprising an exhibition panel (2) configured to lay, in use, at least partially on a plane substantially inclined with respect to a horizontal plane and destined and configured to support a plurality of hydrothermal sanitary components (10a-10d); and
retention means (2f, 4, 10p, 11) configured to realize a removable connection between the exhibition panel (2) and the hydrothermal sanitary components (10a-10d), the retention means (2f, 4, 10p, 11) being further destined and configured to allow a user to arrange, and repeatedly re-arrange multiple times, the hydrothermal sanitary components (10a-10d) on the exhibition panel (2) according to a plurality of user-defined and re-definable patterns or spatial configurations, simulating a real installation of said hydrothermal sanitary components (10a-10d) in an operating environment, such as a bathroom or similar.

According to another non-limiting aspect, the first module (1) is a floor standing module, and is provided with a supporting frame configured to be laid, or fixed, to the ground, the supporting frame being configured to support said exhibition panel (2).

According to another non-limiting aspect, the exhibition panel (2) is arranged and configured to lay, in use, at least partially on a plane which is substantially vertical with respect to the ground.

According to another non-limiting aspect, the exhibition panel (2) has a substantially planar structure and/or has a substantially planar front face.

According to another non-limiting aspect, the exhibition panel (2) comprises an outer perimeter,
- the user-defined and re-definable pattern or spatial configuration is realized within the outer perimeter and wherein the retention means (2f, 4, 10p, 11) are destined and configured to allow the user to arrange, and repeatedly re-arrange multiple times, the hydrothermal sanitary components (10a-10d) on the exhibition panel (2) in any position within the outer perimeter.

According to the invention said retention means (2f, 4, 10p, 11) comprise at least a respective first retention element (4) irremovably engaged to a respective hydrothermal sanitary component (10a-10d).

According to the invention at least one front surface of the exhibition panel (2) is specifically configured and destined to directly contact and interact with at least a part of the first retention element (4) to realize said removable connection; and/or wherein said retention means (2f, 4, 10p, 11) are provided with at least a second retention element (11) which is attached, optionally irremovably attached, or is part of, or is realized integrally with, or is, the exhibition panel (2), the second retention element (11) being configured and destined to interact with a hydrothermal sanitary component (10a-10d) or with at least a first retention element (4) coupled to a hydrothermal sanitary component (10a-10d) to realize said removable connection.

According to another non-limiting aspect, the first retention element (4) and/or the second retention element (11) comprise at least one magnetic and/or at least one magnetically attractable element and/or wherein the second retention element (11) extends substantially along the entire surface of the exhibition panel (2) or wherein the exhibition panel (2) comprises a plurality of second retention elements (11) arranged according to a predefined pattern or spatial configuration on said exhibition panel (2), preferably reciprocally spaced and/or equally spaced.

According to another non-limiting aspect, the at least one magnetic or magnetically attractable element (11) is, or coincides, substantially to the exhibition panel (2) or to at least part, optionally at least ¾ of the whole area of the exhibition panel (2).

According to another non-limiting aspect, the retention means (2f, 4, 10p, 11) are configured for realizing a removable connection with said hydrothermal sanitary components (10a-10d) at a substantially rear portion thereof, optionally wherein when at least one hydrothermal sanitary component (10a-10d) is engaged to the retention means (4, 10p, 11), at least part of said at least one retention element (2f, 4, 10p, 11) is hidden from the sight of a user observing the first module (1) substantially from a front direction by said hydrothermal sanitary component (10a-10d), optionally wherein the entire retention element (2f, 4, 10p, 11) is hidden from the sight of a user observing the first module (1) substantially from a front direction by said hydrothermal sanitary component (10a-10d).

According to another non-limiting aspect, the exhibition panel (2) comprises a plurality of marking elements (3) arranged at specific positions on the exhibition panel (2), optionally at a front surface of the exhibition panel (2) and/or visually detectable on the front surface of the exhibition panel (2), the plurality of marking elements (3) realizing a predefined visual aiding pattern helping an arrangement of at least one hydrothermal sanitary component (10a-10d) on the exhibition panel (2).

According to another non-limiting aspect, the plurality of marking elements (3) realize a predefined visual aiding pattern helping an arrangement of at least one hydrothermal sanitary component (10a-10d) on the exhibition panel (2).

According to another non-limiting aspect, the marking elements (3) comprise or are at least part of the second retention elements (11).

According to another non-limiting aspect, the marking elements (3) differ, in particular spatially differ, from the second retention elements (11), or can be physically detached from the second retention elements (11).

According to another non-limiting aspect, the marking elements (3) are removable form the exhibition panel (2) and/or are removably connected to the exhibition panel (2) at a front surface thereof.

According to another non-limiting aspect, the exhibition panel (2) comprises a front element and a back element (2r).

According to another non-limiting aspect, the front element and the back element (2r) are co-planar, and/or the back element (2r) lays, at least locally, on a plane which is parallel to the plane on which, at least locally, the front element lays.

According to another non-limiting aspect, the front element and the back element (2r) are configured to be in a reciprocal contact.

According to another non-limiting aspect, the first module (1) comprises at least one plug configured to keep the front element and the back element (2r) in said reciprocal contact and/or configured to keep the front element and the back element (2r) in a reciprocal predefined position.

According to another non-limiting aspect, the front element and the back element (2r) comprise at least one respective through hole configured to allow the passage of said plug, optionally comprising a plurality of respective though-holes arranged according to a same, predefined, spatial pattern, the plurality of through holes being configured to allow the passage of said plug.

According to another non-limiting aspect, an assembly comprising the through hole and at least one plug is configured to realize a bayonet-like coupling.

According to another non-limiting aspect, the marking element (3) comprises said plug, and/or the plug is integral with said marking element (3).

According to another non-limiting aspect, the marking element (3) comprise at least one strip-like element, optionally configured to simulate a conduit and/or an electrical wiring connected in use to the hydrothermal component (10a-10d).

According to another non-limiting aspect, the strip-like element is configured to be magnetically connected to a front surface of the exhibition panel (2).

According to another non-limiting aspect, the retention means (2f, 4, 10p, 11) are configured to realize a bayonet-like connection, in particular a bayonet-like removable connection, between the exhibition panel (2) and the hydrothermal sanitary component (10a-10d).

According to another non-limiting aspect, the retention means (2f, 4, 10p, 11) are configured to realize a bayonet-like connection, in particular a bayonet-like removable connection, between the exhibition panel (2) and the hydrothermal sanitary component (10a-10d), and wherein the retention means (2f, 4, 10p, 11) comprise at least one shaped though-hole (2f) practiced on said exhibition panel (2); the shaped through hole (2f) being configured to couple, in use, with a retention pin (10p) arranged at a portion, optionally a rear portion, of the hydrothermal sanitary component (10a-10d).

According to another non-limiting aspect, the retention means (2f, 4, 10p, 11) comprise at least one retention pin (10p) arranged on the exhibition panel (2), optionally protruding from a front surface of the exhibition panel (2), the retention pin (10p) being configured to couple, in use, with a shaped through hole (2f) practiced on a portion, optionally a rear portion, of the hydrothermal sanitary component (10a-10d).

According to another non-limiting aspect, the retention means (2f, 4, 10p, 11) comprise at least one retention pin (10p) arranged on the exhibition panel (2), optionally protruding from a front surface of the exhibition panel (2), the retention pin (10p) being configured to couple, in use, with a shaped through hole (2f) practiced on a compensation element (10t) arranged between exhibition panel (2) and the hydrothermal sanitary component (10a-10d) and configured to compensate a local distortion or deformation or inclination of said exhibition panel (2), optionally configured to compensate the local distortion or deformation or inclination for a predetermined compensation angle (*α*), optionally wherein said compensation angle (*α*) at least partially compensates a distortion or deformation or inclination angle (*β*) locally assumed by the exhibition panel (2) due to a weight and/or a lever force at least locally exerted on the exhibition panel (2) by the hydrothermal sanitary element (10a-10d).

According to another non-limiting aspect, the retention means (2f, 4, 10p, 11) comprise at least one shaped though-hole (2f) practiced on said exhibition panel (2); the shaped through hole (2f) being configured to couple, in use, with a retention pin (10p) arranged at a portion, optionally a rear portion, of a compensation element (10t) arranged between exhibition panel (2) and the hydrothermal sanitary component (10a-10d) and configured to compensate a local distortion or deformation or inclination of said exhibition panel (2), optionally configured to compensate the local distortion or deformation or inclination of said exhibition panel (2) for a predetermined compensation angle (*α*), optionally wherein said compensation angle (*α*) at least partially compensates a distortion or deformation or inclination angle (*β*) locally assumed by the exhibition panel (2) due to a weight and/or a lever force at least locally exerted on the exhibition panel (2) by the hydrothermal sanitary element (10a-10d).

According to another non-limiting aspect, the assembly realized by the shaped through hole (2f) and by the retention pin (10p) realizes, in use, a bayonet-like coupling, and/or the retention means (2f, 4, 10p, 11) are configured to realize a bayonet-like connection, in particular a bayonet-like removable connection, between the exhibition panel (2) and the hydrothermal sanitary component (10a-10d).

According to another non-limiting aspect, the retention pin (10p) comprises an elongated body and a retention head, the retention head having a size, optionally a diameter, larger than a size, optionally a diameter, of the elongated body.

According to another non-limiting aspect, the shaped through hole (2f) comprises a first, larger, portion suitable to allow the introduction of the retention head of the retention pin (10p), and a second, smaller, portion that is configured to allow the introduction of the elongated body.

According to another non-limiting aspect, the display system further comprises a second device or module (1') configured for removably housing a plurality of hydrothermal sanitary components (10a-10d) according to a predefined displaying pattern or configuration, preferably grouped per category and/or type, the second module (1') comprising at least one movable panel (1e) having a displaying surface at which at least one of said plurality of hydrothermal sanitary components (10a-10d) is removably held.

According to another non-limiting aspect, the movable panel (1e) can be arranged at least: in a first spatial orientation corresponding to a first configuration of the second module (1'), optionally in which the displaying surface mainly extends orthogonally to a depth axis of said second module (1') and frontally with respect to a user of the second module (1'); and in a second spatial orientation rotated, preferably substantially orthogonally, with respect to the first spatial orientation and corresponding to a second configuration of the second module (1').

According to another non-limiting aspect, the displaying surface extends parallel to the depth axis of said second module (1').

According to another non-limiting aspect, the movable panel (1e) can be arranged at least in correspondence of a first position at a first distance with respect to a lateral end of the second module (1') and in correspondence of a second position at a second distance, different from the first distance, with respect to the lateral end of the second module (1'), optionally by translation.

According to another non-limiting aspect, the movable panel (1e) can be moved in a composite movement comprising a rotation with respect to a vertical axis thereof and/or a translation in a direction substantially orthogonal to said vertical axis.

According to another non-limiting aspect, the first module (1') comprises retention means (2f, 4, 10p, 11) configured to realize a removable connection between the movable panel (1e) and the hydrothermal sanitary components (10a-10d),
said retention means (2f, 4, 10p, 11) being provided with at least a second retention element (11) which is attached, optionally irremovably attached, or is part of, or is realized integrally with, or is, the movable panel (1e).

According to another non-limiting aspect, the second retention element (11) is configured and destined to interact with a hydrothermal sanitary component (10a-10d) or with at least a first retention element (4) coupled to a hydrothermal sanitary component (10a-10d) to realize said removable connection.

According to another non-limiting aspect, the second module (1') is a floor-standing module provided with a supporting frame housing and/or realizing at least one rail (1r) configured for allowing the motion of the panel (1e) at least between the first and the second spatial orientation and/or at least between the first position and the second position.

According to another non-limiting aspect, the at least one rail (1r) is configured for allowing the rotation of the movable panel (1e) around its vertical axis at least from the first spatial orientation to the second spatial orientation.

According to another non-limiting aspect, the marking elements (3) comprise pins, optionally substantially round pins, which are substantially co-planar with the front surface of the exhibition panel (2).

According to another non-limiting aspect, the marking elements (3) comprise a plurality of lights arranged behind the front surface of the exhibition panel.

According to another non-limiting aspect, the marking elements (3) are configured for emitting light towards the front portion of the first module (1) and/or are configured for emitting light through the exhibition panel (2).

According to another non-limiting aspect, the marking elements (3) comprise each at least on light-emitting module.

According to another non-limiting aspect, the light-emitting module is arranged behind the exhibition panel (2).

According to another non-limiting aspect, the light-emitting module comprises at least a first operative configuration wherein it does not emit light and a second operative configuration wherein it emits light.

According to another non-limiting aspect, the light-emitting module is configured to emit light in a direction toward the user when the user is arranged substantially in front of said exhibition panel (2).

According to another non-limiting aspect, the light-emitting module is configured to emit light in a direction at least locally substantially orthogonal to the plane on which at least a portion of the exhibition panel (2) lays.

According to another non-limiting aspect, the exhibition panel (2) extends at least for a height above 140cm or 150cm, or 160cm or 170cm, or 180cm or 190cm.

According to another non-limiting aspect, at least the second module (1') comprises a plurality of drawers (1d) configured to hold and/or contain at least one hydrothermal sanitary component (10a-10d).

According to another non-limiting aspect, at least said first module (1) and/or said second module (1') is/are modular modules.

According to another non-limiting aspect, the second module (1') comprises a plurality of sub-modules (1c, 1l); said sub-modules (1c, 1l) optionally comprising at least one between a first sub-module constituting a central portion (1c) of the second module (1') and a second, optionally a second and a third, sub-module (1l) constituting a lateral sub-module of the second module (1').

According to another aspect, it is herewith disclosed an exhibition device or module (1') configured for removably housing a plurality of hydrothermal sanitary components (10a-10d) according to a predefined displaying pattern or configuration, preferably grouped per category and/or type, the second module (1') comprising at least one movable panel (1e) having a displaying surface at which at least one of said plurality of hydrothermal sanitary components (10a-10d) is removably held, and wherein:
- the movable panel (1e) can be arranged at least: in a first spatial orientation corresponding to a first configuration of the second module (1'), optionally in which the displaying surface mainly extends orthogonally to a depth axis of said second module (1') and frontally with respect to a user of the second module (1'); and in a second spatial orientation rotated, preferably substantially orthogonally, with respect to the first spatial orientation and corresponding to a second configuration of the second module (1'), optionally in which the displaying surface extends parallel to the depth axis of said second module (1'), and/or wherein the movable panel (1e) can be arranged at least in correspondence of a first position at a first distance with respect to a lateral end of the second module (1') and in correspondence of a second position at a second distance, different from the first distance, with respect to the lateral end of the second module (1'), optionally by translation,
- and/or wherein the movable panel (1e) can be moved in a composite movement comprising a rotation with respect to a vertical axis thereof and/or a translation in a direction substantially orthogonal to said vertical axis.

According to the present invention a display kit is disclosed; the kit comprises a system according to one or more of the aspects herein disclosed and further comprising at least one, preferably a plurality of, hydrothermal sanitary components (10a-10d).

According to another non-limiting aspect, said at least one, preferably a plurality of, hydrothermal sanitary components (10a-10d) is a full-scale model replicating the visible part of the real, operative, corresponding component or a part of the real, operative, corresponding component.

According to another non-limiting aspect, the hydrothermal sanitary component (10a-10d) comprises at least one retention pin (10p) arranged at a rear portion of the hydrothermal sanitary component (10a-10d); the retention pin (10p) being configured to couple with a shaped through hole (2f) of the exhibition panel (2).

According to another non-limiting aspect, the hydrothermal sanitary component (10a-10d) comprises at least one shaped through hole (2f) practiced on a rear portion of the hydrothermal sanitary component (10a-10d); the shaped through hole (2f) is configured to couple with a retention pin (10p) arranged on the exhibition panel (2), optionally at a front surface of the exhibition panel (2).

According to another non-limiting aspect, the hydrothermal sanitary component (10a-10d) is configured to be removably connected to the exhibition panel (2) through a bayonet-like connection and/or the retention means (2f, 4, 10p, 11) are configured to realize a bayonet-like connection between the exhibition panel (2) and the hydrothermal sanitary component (10a-10d).According to another non-limiting aspect, the kit comprises a compensation element (10t), configured to compensate a local distortion or deformation of said exhibition panel (2); the compensation element (10t) being interposed and/or sandwiched between the exhibition panel (2) and the hydrothermal sanitary component (10a-10d), and/or directly contacting the exhibition panel (2), at a first side, and the hydrothermal sanitary component (10a-10d) at a second side different from said first side.

According to another non-limiting aspect the compensation element (10t) is integral with the hydrothermal sanitary component (10a-10d).

According to another non-limiting aspect, the hydrothermal sanitary component (10a-10d) comprises a compensation element (10t), configured to compensate a local distortion or deformation of said exhibition panel (2); the compensation element (10t) being interposed and/or sandwiched between the exhibition panel (2) and the hydrothermal sanitary component (10a-10d), and/or directly contacting the exhibition panel (2), at a first side, and the hydrothermal sanitary component (10a-10d) at a second side different from said first side.

According to another non-limiting aspect, the compensation element (10t) is removably connected to said hydrothermal sanitary component (10a-10d).

According to another non-limiting aspect, the compensation element (10t) is arranged at a rear portion, in particular at a rear end portion, of the exhibition panel (2).

According to another non-limiting aspect, the compensation element (10t) is a triangular and/or a wedge-like element configured to modify or compensate an inclination or distortion or deformation of the exhibition panel (2), optionally being configured to modify or compensate said inclination or distortion or deformation for a predetermined compensation angle (*α*), optionally wherein said compensation angle (*α*) at least partially compensates a distortion or deformation or inclination angle (β) locally assumed by the exhibition panel (2) due to a weight and/or a lever force at least locally exerted on the exhibition panel (2) by the hydrothermal sanitary element (10a-10d).

According to another non-limiting aspect, the retention means (2f, 4, 10p, 11) comprise at least one retention pin (10p) arranged on the exhibition panel (2), optionally protruding from a front surface of the exhibition panel (2), the retention pin (10p) being configured to couple, in use, with a shaped through hole (2f) practiced on said compensation element (10t).

According to another non-limiting aspect, the retention means (2f, 4, 10p, 11) comprise at least one shaped though-hole (2f) practiced on said exhibition panel (2); the shaped through hole (2f) being configured to couple, in use, with a retention pin (10p) arranged at a rear portion of the compensation element (10t).

The present invention further discloses the use of the display system according to one or more of the aspects herein described for displaying at least one, preferably a plurality of, hydrothermal sanitary components (10a-10d).

In particular, according to the invention it is disclosed the use of a display system according to one or more of the preceding claims to arrange a plurality of hydrothermal sanitary components (10a-10d) on the exhibition panel (2) according to at least one user-defined and re-definable pattern or spatial configuration, simulating a real installation of said hydrothermal sanitary components (10a-10d) in an operating environment, such as a bathroom or similar.

According to another non-limiting aspect, the hydrothermal sanitary component (10a-10d) comprises at least one of the items of the following list: a sink, a faucet, a controlling valve of a faucet, a water distributor of a faucet, a toilet, a showerhead, a part of a showerhead, a bidet, a boiler, a part of a bathtub, a water thermal heater.

Another object of the present invention is a method for displaying hydrothermal sanitary components (10a-10d), said method comprising using a display system (1, 1') according to one or more of the aspects herein disclosed to perform a step of removable engagement of at least hydrothermal sanitary component (10a-10d) with said exhibition panel (2) of the first module (1) of the system.

Another object of the present invention is a method for displaying hydrothermal sanitary components (10a-10d), the method comprising at least a step of removable engagement of at least one hydrothermal sanitary component (10a-10d) with an exhibition panel (2) of a first module (1) of a display system (1, 1') by retention means (2f, 4, 10p, 11) configured to realize a removable connection between the exhibition panel (2) and the hydrothermal sanitary components (10a-10d), wherein the exhibition panel (2) is specifically destined and configured for supporting a plurality of hydrothermal sanitary components (10a-10d); and
wherein the step of removable engagement, when the hydrothermal sanitary components (10a-10d) are removably engaged with the exhibition panel (2), determines a user-defined and re-definable pattern or spatial configuration of the hydrothermal sanitary components (10a-10d) on the exhibition panel (2) simulating a real installation of said hydrothermal sanitary components (10a-10d) in an operating environment, such as a bathroom or similar.

According to another non-limiting aspect, the step of removable engagement comprises magnetically coupling at least one of said hydrothermal sanitary components (10a-10d) to a front face of the exhibition panel (2), optionally by coupling a magnetic retention element (4) arranged on a back surface of said hydrothermal sanitary component (10a-10d) with the front face of the exhibition panel (2).

According to another non-limiting aspect, the step of removable engagement comprises magnetically coupling at least one of said hydrothermal sanitary components (10a-10d) to a magnetic face of the exhibition panel (2) or to a magnetic retention element (11) arranged at the exhibition panel (2).

According to another non-limiting aspect, the step of removable engagement comprises mechanically coupling at least one of said hydrothermal sanitary components (10a-10d) to a front face of the exhibition panel (2) by at least one hooking element (4) arranged on the front face of the exhibition panel (2)

According to another non-limiting aspect, the step of removable engagement comprises arranging and repeatedly re-arranging multiple times the pattern or spatial configuration of the hydrothermal sanitary components (10a-10d) on the exhibition panel.

According to another non-limiting aspect, the step of removable engagement comprises the engagement of at least one hydrothermal sanitary component (10a-10d) with the exhibition panel (2) of the first module (1) the a display system (1, 1') referring to, or with respect to, a plurality of marking elements (3) arranged at specific positions on the exhibition panel (2), optionally at a front surface of the exhibition panel (2) and/or visually detectable on the front surface of the exhibition panel (2).

According to another non-limiting aspect, the plurality of marking elements (3) realize a predefined visual aiding pattern helping an arrangement of at least one hydrothermal sanitary component (10a-10d) on the exhibition panel (2).

According to another non-limiting aspect, the plurality of marking elements (3) comprise at least one light-emitting module, having at least one operative configuration wherein it does not emit light, and a second operative configuration wherein it emits light, and the method further comprises the step of configuring, or switching, the at least one light-emitting module in the second operative configuration, and referring to the plurality of marking elements (3) comprises referring to the light emitted by the at least one light-emitting module.

According to another non-limiting aspect, the light-emitting module, in the second operative configuration, emits light in the direction of observation of a user arranged substantially in front of said exhibition panel (2).

According to another non-limiting aspect, the method further comprises a step of selection of at least one hydrothermal sanitary component (10a-10d) from a second module (1') of a display system (1, 1'), the step of selection taking place before the step of removable engagement.

According to another non-limiting aspect, the step of selection comprises at least one of the following steps:
- moving at least one movable panel (1e) of the second module (1'), wherein the movable panel (1e) comprises a displaying surface at which at least one hydrothermal sanitary component (10a-10d) is removably engaged, between a first spatial orientation corresponding to a first configuration of the second module (1'), optionally in which the displaying surface mainly extends orthogonally to a depth axis of said second module (1') and frontally with respect to a user of the second module (1'), and a second spatial orientation rotated, preferably substantially orthogonally, with respect to the first spatial orientation and corresponding to a second configuration of the second module (1'), optionally in which the displaying surface extends parallel to the depth axis of said second module (1'), and/or
- comprises moving at least one movable panel (1e) of the second module (1') between a first position at a first distance with respect to a lateral end of the second module (1') and a second position at a second distance, different from the first distance, with respect to the lateral end of the second module (1'), optionally by translation, and/or
- comprises moving at least one movable panel (1e) of the second module (1') by making it perform a composite movement comprising with respect to a vertical axis thereof and/or a translation in a direction substantially orthogonal to said vertical axis.

According to another non-limiting aspect, the retention means (2f, 4, 10p, 11) are configured to realize a bayonet-like connection, in particular a bayonet-like removable connection, between the exhibition panel (2) and the hydrothermal sanitary component (10a-10d) and comprise at least one retention pin (10p) and at least one shaped through hole (2f) alternatively arranged on the exhibition panel (2) and on the hydrothermal sanitary component (10a-10d).

According to another non-limiting aspect, the step of removable engagement comprises:
- engaging at least one retention pin (10p) arranged at, or of, the hydrothermal sanitary component (10a-10d) with the corresponding shaped through hole (2f) practiced on the exhibition panel (2); or
- engaging at least one retention pin (10p) arranged at, or of, the exhibition panel (2) with the corresponding shaped through hole (2f) arranged at, or of, the hydrothermal sanitary component (10a-10d).

According to another non-limiting aspect, said bayonet-like connection comprises the relative motion of the retention pin (10p) with respect to the shaped through hole (2f) along a first axis and then along a second axis, inclined, in particular orthogonal, to the first axis.

According to another non-limiting aspect, the relative motion causes the displacement of at least one retention head of the retention pin (10p) from a first portion of said shaped through hole (2f) configured to allow the passage of the retention head to a second portion of said shaped through hole (2f) configured to allow the passage of an elongated body of the retention pin (10p) to which the retention head is rigidly connected, and configured to impede the extraction of the retention head along said first axis.

According to another non-limiting aspect, the method comprises the provision of a compensation element (10t), configured to compensate a local distortion or deformation of said exhibition panel (2), between the exhibition panel (2) and the hydrothermal sanitary component (10a-10d).

According to another non-limiting aspect, the provision of said compensation element (10t) is performed before the step of removable engagement of the hydrothermal sanitary component (10a-10d) with the exhibition panel (2); the step of removable engagement causing the interposition or the sandwiching of said compensation element (10t) between the exhibition panel (2) and the hydrothermal sanitary component (10a-10d).

According to another non-limiting aspect after the step of removable engagement, the compensation element (10t) directly contacts the exhibition panel (2), optionally a front surface of the exhibition panel (2), at a fist side and directly contacts, at a second side, the hydrothermal sanitary component (10a-10d) optionally at a rear portion thereof.

According to another non-limiting aspect, the step of provision of the compensation element (10t) allows to compensate at least a local distortion or deformation or inclination of the hydrothermal sanitary element (10a-10d) with respect to exhibition panel (2), optionally allowing to compensate a local distortion or deformation or inclination for a predetermined compensation angle (*α*), optionally wherein said compensation angle (α) at least partially compensates a distortion or deformation or inclination angle (β) locally assumed by the exhibition panel (2) due to a weight and/or a lever force at least locally exerted on the exhibition panel (2) by the hydrothermal sanitary element (10a-10d).

### Drawings

In the subsequent detailed description, at least one preferred and non-limiting embodiment of the object of the present disclosure will be described, and the description will be referred to the annexed figures wherein:
- figure 1 shows a front view of a first module of a display system according to the present disclosure;
- figure 2 shows a section view along the lines 1-1 of figure 1, according to a first non-limiting embodiment;
- figure 3 shows a section view along the lines 1-1 of figure 1, according to a second non-limiting embodiment;
- figure 4 shows a front view of a second module of a display system according to the present disclosure.
- figure 5 shows a partial section view of a particular embodiment of a exhibition panel which is part of the display system according to the present disclosure;
- figure 6 shows a perspective view of a particular type of connection between a hydrothermal component and the exhibition panel, this connection being realized though retention pins; and
- figure 7 shows a section view of a hydrothermal component connected to the exhibition panel.

### Detailed description

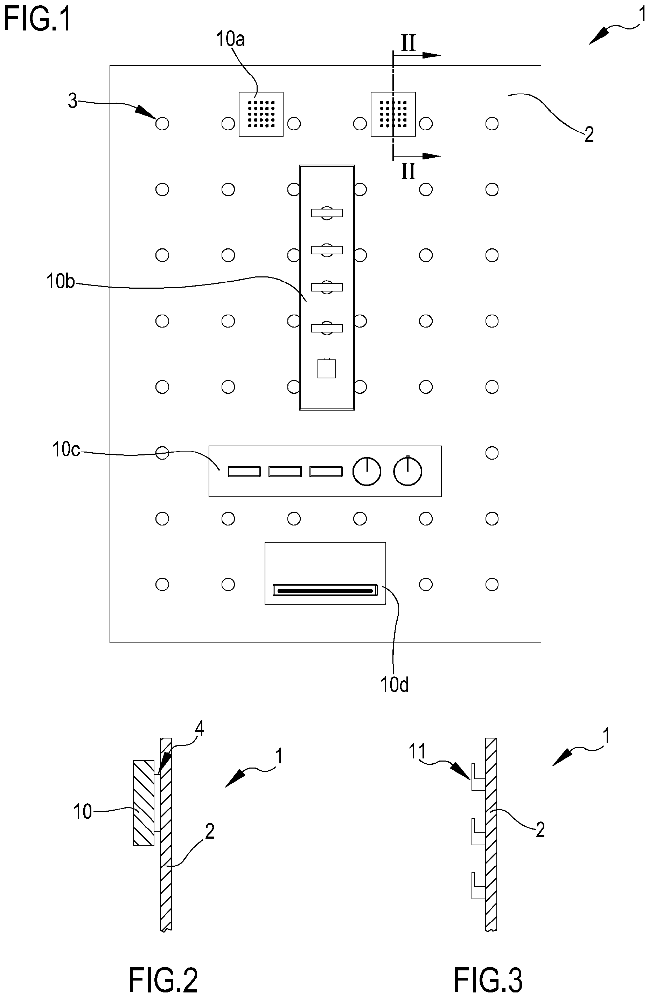

Figure 1 shows a front view of a display system 1, 1' configured to allow a user arrange at least one, and preferably a plurality of, hydrothermal sanitary components 10a-10d according to a predefined and re-definable, in particular a user re-definable spatial configuration by means of a detachable engagement with an exhibition panel or screen which is part of said system.

The hydrothermal sanitary components 10a-10d disclosed in the present description may comprise at least one of the articles belonging to the following list: a sink, a faucet, a controlling valve of a faucet, a water distributor of a faucet, a toilet, a showerhead, a part of a showerhead, a bidet a boiler, a part of a bathtub, a water thermal heater.

It is thus clear that, for the purpose of the present description, the hydrothermal sanitary components may comprise heating articles or components which may include for instance the aforementioned the water thermal heater or boiler and may comprise water distribution articles which may include for instance the faucet and/or the controlling valve of the faucet. Thus, the differentiation between the "water distribution article", or component and the "heating article", or component, mainly refers to the principal destination of use of such article.

In the present application, the wording "hydrothermal sanitary components" will be used to refer to any of the aforementioned products.

In detail, reference numbers 10a-10d that are used in the present disclosure refer to: a showerhead (10a), a water flow regulating system for a showerhead (10b), a water flow regulating system for a bathtub (10c) and a regulating system for a faucet (10d). It may be noted that those items are full-scale models whose size, at least for the portions which can be seen by the user when in use, precisely copies that of the real corresponding devices; anyway, for the purpose of allowing the detachable engagement herein disclosed, the aforementioned items may be deprived of non-visible parts which may protrude backward, and which in use lie within the walls when the device is actually installed in a bathroom; those parts may, in a non-limiting extent, include valve assemblies, **bolts, wirings, lights, electrical** switching cases and water conduits. In other words, those items are full-scale models of real hydrothermal sanitary components 10a-10d that replicate and allow - if so provided - the motion of any visible part or actuator of the fully functioning component.

It may be noted that the hydrothermal sanitary component may comprise electrical connections; when present, in at least a preferred and non-limiting embodiment, the electrical connections may be at least partially, preferably fully, operative at least for providing the illumination of at least one part, optionally a plurality of parts of the hydrothermal sanitary component. This operation may be realized through a normal plug and socket connection to an AC distribution network and/or through a low voltage power supply.

The display system 1, 1' that is object of the present invention, in an embodiment, is provided with a first module 1 and a second module 1' which are, each one, of a floor standing type and which are configured to be arranged at separate, even remote, positions one with respect to the other. The first module 1 has the purpose of allowing a user create a particular configuration of hydrothermal sanitary components that may simulate the real spatial configuration they will have once installed in a real bathroom, while the second module 1' has the main purpose of housing a plurality of articles, in particular hydrothermal sanitary components arranged per category; the user can thus choose one or more component belonging to one or more categories for then arranging them at his will at the first module 1.

Preferably, the first module 1 comprises an exhibition panel 2, which is specifically destined and configured for supporting a plurality of models of said hydrothermal sanitary components.

The main purpose of the exhibition panel is to allow a user to realize a plurality of user-defined, and re-definable, patterns or spatial configurations of hydrothermal sanitary components.

The exhibition panel 2 is further provided with front surface delimited by an outer perimeter, and at least one retention element may be provided on the hydrothermal sanitary component and/or on the exhibition panel 2 for allowing the aforementioned removable connection of the hydrothermal sanitary components 10a-10d. In particular, in an embodiment, the connection of the exhibition panel 2 and at least one hydrothermal sanitary component is of a direct type (in other words, a direct engagement).

Since the exhibition panel 2 substantially simulates a wall of a part of a bathroom, in an embodiment said exhibition panel 2 is mainly configured to be installed in a substantially vertical configuration, i.e. to lay at least partially on a plane which is almost orthogonal to the horizontal plane. Nonetheless, the wording "substantially vertical" shall not be intended to be limiting, since in a more general extent the exhibition panel 2 may be arranged to lay at least partially on a plane substantially inclined with respect to a horizontal plane.

In an embodiment, which is represented in figure 1 and which shall not be considered limiting, the front surface of the exhibition panel 2 is planar. In other embodiments, which are not represented in the annexed figures, the exhibition panel 2 may be a curved exhibition panel. This latter may for instance simulate the wall of a partially circular shower space. The annexed figures show a front exhibition panel in a form of a thin net-like exhibition panel, but this particular configuration shall not be intended as limiting. In an embodiment, the size of the first module 1 is such that the exhibition panel 2 may extend at least for a height above 140 or 150cm, more preferably above 160 or 170cm, or even more preferably above 180cm and 190cm. Thanks to this feature, at least one of the hydrothermal sanitary components 10a-10d may be arranged at a height approximately of 140-150cm, which is the height of a substantial straight sight of a normal user at a certain distance.

The first device or module 1 comprises retention means 4, 11 configured to realize a removable connection between the exhibition panel 2 and the hydrothermal sanitary components and further configured to allow a user to arrange and repeatedly re-arrange, multiple times, the hydrothermal sanitary components on the exhibition panel.

Several patterns or spatial configurations may be thus realized, and the device may be further configured to allow a simulation of a real installation of the hydrothermal sanitary components in an operating environment (e.g. a bathroom or similar).

The retention means 4, 11 may comprise first retention elements 4 and/or second retention elements 11, whose technical features will be described in the subsequent portion of description.

As it is shown in figure 2, in an embodiment the exhibition panel 2 is, or comprises, a metal exhibition panel 2 or anyway a magnetically attractable exhibition panel 2; a plurality of retention elements in a form of magnets 4, configured and destined to be arranged on a rear surface of each hydrothermal sanitary component 10a-10d may be attracted to the exhibition panel 2 by exerting a sufficient friction force to contrast the gravity and allowing the hydrothermal sanitary component 10a-10d to stay at the position at which the user arranges it. In an embodiment, which is clearly non-limiting, the magnets 4 are irremovably engaged to the hydrothermal sanitary component.

The Applicant has noticed that arranging the magnets 4 at the rear surface or wall of each hydrothermal sanitary component 10a-10d allows hiding the magnets 4 from the sight of the user, especially when this latter observes the overall assembly from a substantially frontal point of view. Thus, arranging the magnets 4 at the rear surface or wall of each hydrothermal sanitary component 10a-10d allows keeping unaltered the overall aesthetic impression of the arrangement of the hydrothermal sanitary component 10a-10d on the surface of the exhibition panel 2. Preferably, albeit in a non-limiting extent, the magnet 4, or when in a plurality, the magnets 4, extend on the whole rear surface of each hydrothermal sanitary component10a-10d.

It is thus clear that the magnets 4 (and as well the front surface of the exhibition panel 2) may be configured and destined to directly contact the front surface of the exhibition panel 2, allowing the aforementioned removable connection.

In another non-limiting embodiment, which is not represented in the annexed figures, the second retention elements 11 may be provided, at least in use, in correspondence of the exhibition panel 2. In an embodiment, the exhibition panel 2 itself may be either magnetic or may comprise one or several magnets arranged according to a predetermined pattern or reciprocal displacement scheme or spatial configuration all along the surface of the exhibition panel 2 or, for instance and in a non-limiting extent, for at least for ¾ of the overall surface of the exhibition panel 2. In this latter case, it may be sufficient that the rear surface of each hydrothermal sanitary component 10a-10d is provided or realized in a magnetically attractable material for making the detachable magnetic connection be possible.

Alternatively, in still another non-limiting embodiment (Figure 3), the exhibition panel 2 may be provided with second retention elements 11 in a form of hook-like elements 11 arranged according to a predefined spatial configuration or according to a predefined pattern on the front surface of the exhibition panel 2. The hook-like elements 11 are configured to sustain at least one hydrothermal sanitary component 10a-10b. Also in this case it may be preferable that once the hydrothermal sanitary component is properly connected to the hook-like element 11, this latter substantially disappears from the sight of a user, by being encased or anyway hidden behind the rear surface of the component.

In an embodiment, illuminating elements, e.g. LED light spots, may be provided on the top and/or on at least part of the lateral walls of the exhibition panel 2 to provide proper illumination to the front wall and to the components that may be connected thereto.

In a preferred and non-limiting embodiment, the exhibition panel 2 may be provided with a plurality of marking elements 3, arranged at specific positions on the exhibition panel. In the embodiment of figure 1, the marking elements 3 are arranged at the front surface of the exhibition panel and are visually detectable by the user at least when he is positioned substantially frontally with respect to the front surface of the exhibition panel 2.

In an embodiment, the marking elements 3 may be physically disconnected from the exhibition panel.

The marking elements 3 are conceived for realizing a predefined visual aiding pattern helping the arrangement of at least one hydrothermal sanitary component 10a-10d on the exhibition panel 2. In detail, this pattern is preferably symmetrical with respect at least to the left and right end of the exhibition panel 2.

In the non-limiting embodiment shown in figure 1 the marking elements 3 are substantially round pins which are substantially co-planar with the front surface of the exhibition panel, so as to not to interfere with the proper engagement of any hydrothermal sanitary component 10a-10d at any position. This configuration shall not be intended as limiting, as the marking elements 3 could be in a form, for instance, of a plurality of lights arranged behind the front surface of the exhibition panel. In this latter a case the marking elements 3 may thus be in the form of at least one light-emitting module which has at least a first operative configuration wherein it does not emit light and a second operative configuration wherein it emits light. In a preferred albeit non-limiting embodiment, the light-emitting module may be dimmable and thus it may be configured in several operative configurations of dimmed light emission. This at least light-emitting module may be configured to radiate light at least in a direction that is, at least locally, orthogonal to the plane on which, at least locally, lays the exhibition panel 2.

Preferably, albeit in a non-limiting extent, the marking elements 3 may comprise at least a part of the second retention elements 11 or may spatially differ or may be physically detached, from the second retention elements 11.

Alternatively or in combination with the aforementioned configurations, the marking elements 3 may further comprise at least one, preferably a plurality of, strip-like elements, in particular flexible and/or deformable strip-like elements. The strip-like elements may be removably connected to the front surface of the exhibition panel 2. For instance, the strip-like elements may be connected to the front surface of the exhibition panel 2 through a magnetic connection. These latter elements may of several thicknesses and/or colors, and in a non-limiting extent, may be configured to allow a technical user to visually draft spatial arrangements of conduits and/or electrical wirings, simulating the real arrangement of conduits and/or electrical wirings that actually will be used for properly feeding the hydrothermal components.

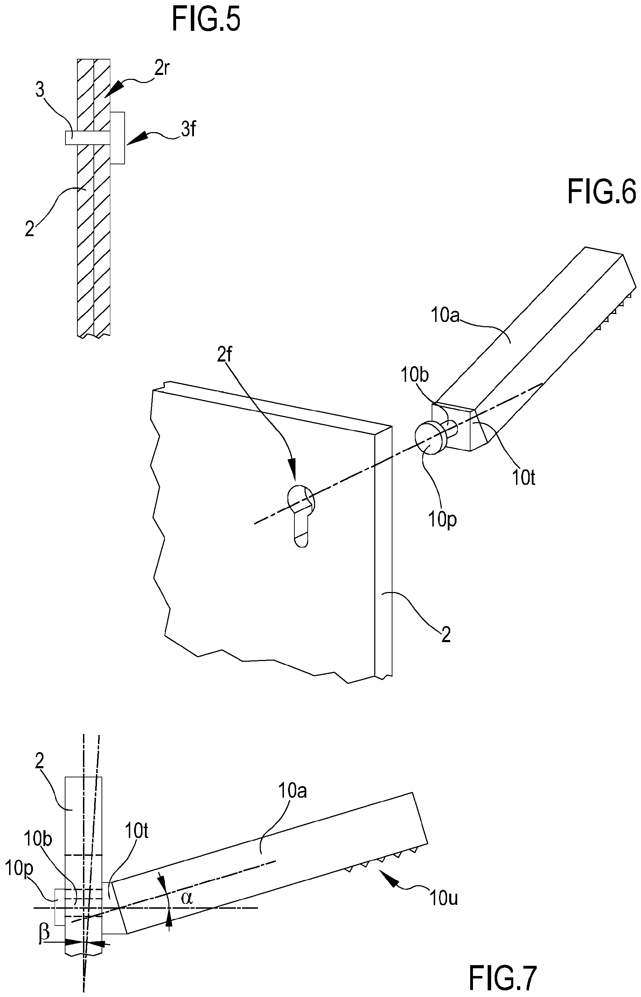

As shown in figure 5, an embodiment of the first module 1 is provided with an exhibition panel 2 comprising a front element and a back element 2r laying on a plane parallel to the plane at which the front element lays. The front element, which in figure 5 is identified by the reference number 2, is actually the element at which there is the physical contact with the hydrothermal sanitary components 10a-10d takes place. Preferably, albeit in a non-limiting extent, the rear element 2r is the element which most provides robustness to the exhibition panel 2, and which actually allows to make the exhibition panel 2 sufficiently resistant to withstand several kilograms of hydrothermal sanitary components 10a-10d attached thereto.

The front element and the rear element may be coupled together with several techniques, among which a non-limiting example includes the presence of a plurality of plugs passing through through holes of the exhibition panel 2 between the front surface of the front element and the rear face of the rear element. The plugs may be, or may be integral with, the marking elements 3. In this latter case, it is clear that the marking elements 3 can be removed from the exhibition panel 2. Figure 5 shows a particular embodiment of the marking element 3 whose rear portion comprises a retaining portion 3f suitable to keep the rear element 2r firmly against the front element of the exhibition panel 2; thus it may be inferred that the front and the rear element are in a reciprocal contact. The retaining portion 3f introduces in the through holes preferably with a bayonet-like coupling.

The Applicant has further noticed that sometimes the hydrothermal components may comprise items that provide a relevant lever force on the exhibition panel 2 when connected thereto; this lever force can be the result of the weight of the hydrothermal component and/or can be the result of the particular shape of the item. For instance a particularly long showerhead, in particular when realized in metal, may have a significant weight and, as well, due to its proportions, may exert a relevant lever force. For such hydrothermal components, the Applicant has conceived a particular type of retention means that help to provide a firm and stable removable connection with the exhibition panel 2 also for heavy and/or long components. This particular type of retention means is well represented in figures 6 and 7.

In detail, figures 6 and 7 show a non-limiting type of hydrothermal component, in particular a long showerhead, provided with nozzles 10u arranged preferably in correspondence of a frontal end portion. At the opposite rear end portion, which is the portion substantially closer to the exhibition panel, the hydrothermal component is provided with at least one retention pin 10p provided with an elongated body, in the depicted embodiment substantially cylindrical, and provided with a retention head, having a size, in particular a diameter, larger than the diameter of the elongated body. Preferably, at least a couple of left, right retention pins 10p is present on the hydrothermal sanitary component, in order to provide a suitable removable connection stability with the exhibition panel 2.

The retention pin 10p can be realized in several materials, but in a preferred and non-limiting embodiment, it is realized in metal, e.g. in steel.

The retention pin 10p is configured for being introduced in a shaped through hole identified with the reference number 2f, thus realizing a bayonet-like coupling. The shaped through hole 2f is arranged at the exhibition panel 2. When in a configuration with a front element and rear element 2r, the shaped through hole 2f is realized on both said elements.

In fact, the shaped through hole 2f is provided with a first, larger, portion suitable to allow the introduction of the retention head of the retention pin 10p, and a second, smaller, portion that is configured to allow the introduction of the elongated body. As it may be apparent from figure 6, the shape of the through hole 2f may be similar to that of a keyhole.

In other words, the bayonet-like connection here described comprises the relative motion of the retention pin 10p with respect to the shaped through hole 2f along a first axis and then along a second axis, inclined, in particular orthogonal, to the first axis. The relative motion causes the displacement of at least one retention head of the retention pin 10p from a first portion of said shaped through hole 2f configured to allow the passage of the retention head to a second portion of said shaped through hole 2f configured to allow the passage of an elongated body of the retention pin 10p to which the retention head is rigidly connected, and configured to impede the extraction of the retention head along said first axis.

It may be noted that the extension of the elongated body shall be sufficient to pass the thickness of the exhibition panel 2, also when this latter comprises the back element 2r.

It may be further noted that the shaped through holes 2f may be the same through holes configured for holding the plugs or, alternatively, they may be other holes.

In this way, when the user wants to connect the hydrothermal component 10a with the panel, in a first step of motion the user axially aligns the retention head of the retention pin 10p with the first portion of the shaped through hole 2f, and then performs a second step of motion in which he moves slightly the hydrothermal component 10a downwardly, or in any case in a direction inclined, in particular, substantially orthogonal to the aforementioned axial alignment, thus reaching the bottom of the second portion. The extraction of the hydrothermal component is thus impeded by virtue of the contrast of the retention head with the part of the wall surrounding the second portion.

Even if the present description relates to a configuration wherein the retention pins 10p are provided on the hydrothermal component, it shall be noted that also the opposite configuration could be realized: the retention pins 10p could be arranged on the exhibition panel 2 (in particular, frontally protruding from the front surface of the exhibition panel 2), and respective shaped holes could be provided on the hydrothermal component, in particular at the rear part thereof.

The Applicant has further observed that in some cases the weight and/or the lever force exerted by the hydrothermal component is sufficient to at least locally distort, or deform, the exhibition panel 2. The distortion or deformation or inclination may result in a deformation or inclination or distortion angle *β* (shown in figure 7) between a portion of the exhibition panel 2, at least the portion close to the hydrothermal component, and the rest of the plane on which the exhibition panel 2 lays or in an overall inclination of the whole exhibition panel 2.

When the hydrothermal component shall be installed orthogonally with respect to the exhibition panel 2, for instance for providing a particular aesthetic effect, this distortion or deformation may result in an improper alignment between the hydrothermal component and the exhibition panel 2. In a particular configuration wherein the exhibition panel 2 is vertical and the hydrothermal component, for instance the showerhead should be parallel to the ground, the distortion or deformation may result in the showerhead pointing downwardly.

The Applicant has thus conceived a compensation element 10t, which is arranged at the rear end portion of the hydrothermal component, and this latter element is conceived to compensate the local distortion or deformation or inclination of the exhibition panel 2 in order to allow the hydrothermal component be arranged a final predetermined orientation with respect to the overall exhibition panel 2 notwithstanding the aforementioned distortion or deformation.

The compensation element 10t, which for the purposes of the present description may be also called inclination compensation element or distortion or deformation compensation element, in use is configured to contact the front surface of the exhibition panel 2 and in a particular and non-limiting embodiment, which is the embodiment shown in figures 6 and 7, the compensation element 10t is substantially a triangular, or wedge-like, element causing an inclination of a predetermined compensation angle α which, at least theoretically, compensates the deformation, distortion or inclination angle *β*.

In an embodiment, the compensation element 10t is integral with the hydrothermal component, but this configuration shall not be intended as limiting, since in another embodiment the compensation element 10t may be an element which can be attached and removed from the hydrothermal sanitary component.

Preferably, albeit in a non-limiting extent, the width of the compensation element 10t is the same to that of the respective hydrothermal sanitary component.

The compensation element 10t may be provided either with a retention pin 10p, preferably a couple of retention pins 10p, or with at least one, preferably a plurality of, shaped through holes 2f. The conformation and operation of the retention pins or shaped through holes of the compensation element 10t is the same as above described, and therefore is not herewith repeated. Clearly, the presence of retention pins 10p or of shaped through holes 2f depends on the presence, at least on the exhibition panel 2, of the proper opposite retention means. It may be finally noted that in case the compensation element 10t can be disconnected from the hydrothermal sanitary component 10a-10d, and in case the hydrothermal sanitary component 10a-10d is provided with at least one retention pin 10p, or at least one shaped through hole 2f as above described, the compensation element 10t may be realized in one of the following alternative configurations:
- a first configuration wherein the compensation element 10t is provided at a first side (e.g. the side configured to lay against the exhibition panel 2) of at least one, preferably a plurality of, retention pins 10p configured to couple with at least one, preferably a plurality of, shaped through holes 2f of the exhibition panel 2, and at a second side (e.g. the side configured to lay against the rear side of the hydrothermal sanitary component 10a-10d) of at least one, preferably a plurality of, shaped through holes 2f configured to couple with at least one, preferably a plurality of, retention pins 10p of the hydrothermal sanitary component 10a-10d;
- a second configuration wherein the compensation element 10t is provided at a first side (e.g. the side configured to lay against the exhibition panel 2) of at least one, preferably a plurality of, shaped through holes 2f configured to couple with at least one, preferably a plurality of retention pins 10p of the exhibition panel 2, and at a second side (e.g. the side configured to lay against the rear side of the hydrothermal sanitary component 10a-10d) of at least one, preferably a plurality of, retention pins 10p configured to couple with at least one, preferably a plurality of, shaped through holes 2f of the hydrothermal sanitary component 10a-10d; or, further alternatively,

- a third configuration wherein the compensation element 10t is provided at a first side (e.g. the side configured to lay against the exhibition panel 2) of at least one, preferably a plurality of, shaped through holes 2f configured to couple with at least one, preferably a plurality of retention pins 10p of the exhibition panel 2, and at a second side (e.g. the side configured to lay against the rear side of the hydrothermal sanitary component 10a-10d) of at least one, preferably a plurality of, shaped through holes 2f configured to couple with at least one, preferably a plurality of, retention pins 10p of the hydrothermal sanitary component 10a-10d; or, further alternatively,
- a fourth configuration wherein the compensation element 10t is provided at a first side (e.g. the side configured to lay against the exhibition panel 2) of at least one, preferably a plurality of, retention pins 10p configured to couple with at least one, preferably a plurality of shaped through holes 2f of the exhibition panel 2, and at a second side (e.g. the side configured to lay against the rear side of the hydrothermal sanitary component 10a-10d) of at least one, preferably a plurality of, retention pins 10p configured to couple with at least one, preferably a plurality of, shaped through holes 2f of the hydrothermal sanitary component 10a-10d.

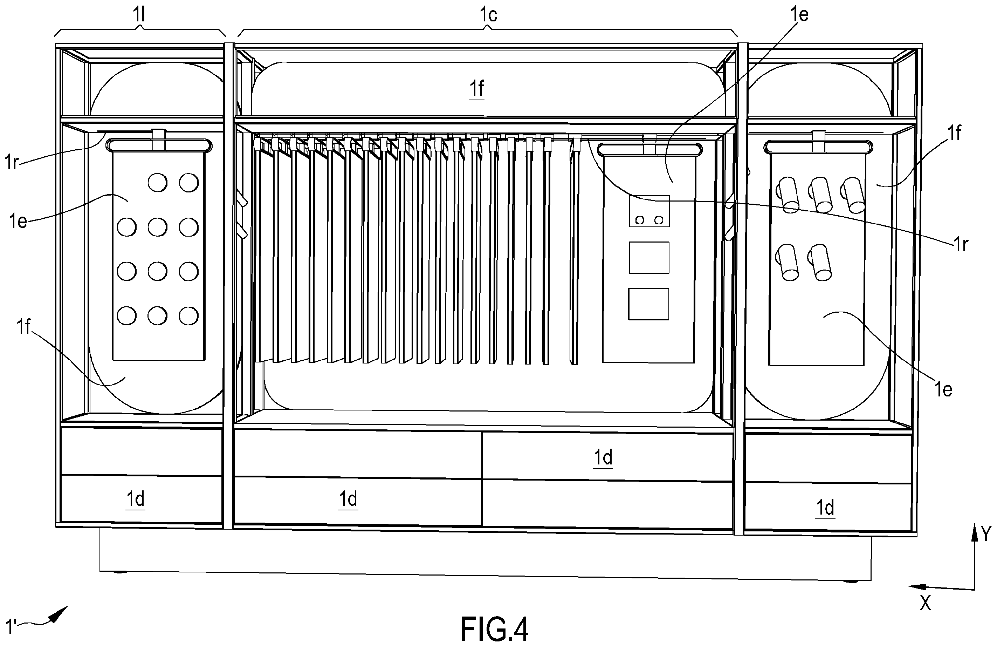

As shown in figure 4, the display system 1, 1' according to the present disclosure further comprises a second device or module 1'. It may be noted that the second module 1', which is a displaying module, has peculiar technical features that allow users select at least one among several hydrothermal sanitary components. The second module 1' also allows to store several hydrothermal sanitary components in a space-saving and effective way.

In accordance to the present disclosure, the second module 1' comprises a front portion, which is the portion at which the user typically stands to take one or more hydrothermal sanitary components 10a-10d, a left portion and an opposite right portion, a back portion, opposite to the front portion, a top portion and a bottom portion opposite to the top portion. The ideal line or axis joining the front and the back portions identifies a depth of the second module 1'. The ideal line or axis joining the right and left portion identifies a width axis of the second module 1'.

The second module 1' is configured for removably housing a plurality of hydrothermal sanitary components 10a-10d arranged and/or housed according to a predefined displaying pattern or configuration, and the plurality of hydrothermal sanitary components 10a-10d may be provided with several components grouped per category and/or type in the various storage or displaying spaces and surfaces of the second module 1'.

Among several features of the second module 1' a particular role is played by the presence of at least one movable panel 1e comprising a displaying surface at which at least one of said plurality of hydrothermal sanitary components 10a-10d is removably held. In particular, figure 4 shows a second module 1' provided with a plurality of movable panels 1e, in particular eighteen movable panels 1e arranged at a central portion 1c of the second module 1'.

The second module 1' shown in figure 4 further comprises two lateral portions 1l, one arranged at the right of the central portion 1c and one arranged at the left of the central portion 1c. Alternative embodiments may comprise only one lateral portion 1l arranged at the left or alternatively at the right of the central portion 1c. The movable panels 1e may be arranged also at the lateral portions 1l.

As shown in figure 4, each of the movable panels 1e may move, and in particular may perform a composite motion with respect to the left or right end portion of the second module 1'. In detail, each of the movable panels 1e may be arranged:
- in a first spatial orientation corresponding to a first configuration of the second module 1' and
- in a second spatial orientation corresponding to a second configuration of the second module 1'.

In the first spatial orientation, the displaying surface of the movable panel 1e mainly extends orthogonally to a depth axis of the second module 1' and, thus, frontally with respect to a user of the second module 1'. In the second spatial orientation, the displaying surface of the movable panel 1e is rotated with respect to the orientation of the first spatial orientation, and is particularly rotated orthogonally. The second spatial orientation is such that the displaying surface of the movable panel 1e extends parallel to the depth axis of the second module 1e.

The transition between the first and the second configuration may take place with an uninterrupted, continuous transition through several intermediate configurations and corresponds to a rotation of the movable panel 1e around a vertical axis thereof.

Moreover, each of the movable panels 1e may move between a first position, at a first distance with respect to a lateral end (e.g. the left end) of the second module 1' and a second position, at a second distance with respect to the same lateral end of the second module 1'. This latter motion corresponds to a translation along a predetermined path, preferably in a direction which is axial and orthogonal to the depth axis of the second module 1' (width axis).

The Applicant notices that each of the movable panels 1e may thus perform a composite motion, in particular and non-limiting through the axial rotation. This composite motion allows for providing a very relevant number of movable panels 1e on the second module 1' while at the same time lateral extension of those panels can be saved with respect to a configuration wherein the same number of panels would be arranged in a juxtaposed configuration along a direction parallel to the width of the second element 1'. Moreover, such composite motion may allow the user to select one particular movable panel 1e among the plurality of panels, create a sufficient space to rotate the panel 1e by transversally distancing the remaining panels of said plurality of movable panels 1e, and then perform the aforementioned rotation. Thanks to this feature, the user observing the second module 1' frontally, not only can choose the specific type of component to move from the second module 1' to the first module 1, but can also easily and fully appreciate the aesthetic appearance of the selected hydrothermal sanitary component not only frontally but also in several lateral orientations without substantially any need of adapting the position held by the user with respect to the second module 1'.

For allowing the aforementioned composite motion, the second module, at least in the central portion 1c, may be provided with at least one rail 1r, which in the embodiment shown in figure 4 is arranged substantially at a top portion of the central portion 1c and allows for holding several movable panels 1e in a suspended configuration. The movable panels 1e are thus hinged to the rail and may slide along the same. In the embodiment shown in figure 4, the rail 1r extends mainly along a direction which is parallel to the direction of the width of the second module 1'.

Also the second module 1' can comprise retention means 4, 11 configured to realize the removable connection of the movable panel 1e with hydrothermal sanitary components 10a-10d. The retention means are in detail provided with retention elements 11, corresponding to the disclosed second retention elements 11 previously cited in the present description, which is configured and destined to interact with at least one hydrothermal sanitary component or with at least one first retention element 4 coupled to a hydrothermal sanitary component to realize the removable connection.

As shown in the annexed figures, the movable panels 1e are provided with a hinging pin suitable to be connected to the respective rail 1r preferably, albeit in a non-limiting extent, in a non-disconnectable way. The movable panels 1e are indeed not intended or destined to be detachably disconnected from the respective module portion.

Preferably, the hinging pin is arranged in correspondence of a central top portion or side of the movable panel 1e, and in particular, as shown in the annexed figures, are arranged in correspondence of a symmetry axis of the movable panel 1e. In detail, it is noted that even if the movable panel 1e is depicted in a substantially rectangular shape, clearly thus having at least one symmetry vertical axis which constitutes the axis at which the hinging pin is arranged, this shape shall not be considered limiting.

Alternatively, in a configuration that is not represented in the annexed figures, at least the central portion 1c of the second module 1' may be provided with a plurality of rails 1r arranged in order to support the movable panels 1e from a top and from a bottom end.

In a preferred and non-limiting embodiment, the second module 1' may be provided with a plurality of drawers 1d, which preferably albeit in a non-limiting extent are arranged at a bottom portion of the second module 1'; this is the case represented in figure 4. In detail, figure 4 shows an embodiment wherein a set of four drawers 1d is at the central portion 1c of the second module 1, a set of two, vertically superimposed, drawers 1d is arranged at the left lateral portion 1l of the second module 1' and set of two, vertically superimposed, drawers 1d is arranged at the right lateral portion 1l of the second module 1'. In detail, in the central portion, the set of four drawers comprises two sub-sets of vertically superimposed drawers 1d.

In the embodiment represented in figure 4, each of the lateral portions 1l further comprises at least one movable panel 1e arranged with a displaying surface parallel to the width axis of the second module 1'. The movable panel 1e is held through a rail 1r of the same type of that disclosed for the central portion 1c; therefore the technical features of the rail, and/or of the connection of the movable panel with the rail, are not newly described.

The drawers may slide axially according to a direction which is parallel to a depth axis of the second module 1' and are configured to house a plurality of hydrothermal sanitary components 10a-10d according to a subdivision in several categories; for instance a first drawer contains only faucets, which may be arranged according to different color shades, while a second drawer contains only towel holders, which may be arranged according to color shades or size.

In a preferred and non-limiting embodiment, the second module 1' may comprise a frame, which may be realized in a metal material, e.g. Inox or chromed steel, in order to allow withstanding relevant weights. The frame supports the rails 1r and the drawers 1d. The frame of the second module 1' is thus configured and destined to be laid on the ground, in order to realize a floor-standing second module 1'.

The rails 1r may be integral with the main frame body or may be in a form of separate pieces that are attached to the main frame body.

In a preferred and non-limiting embodiment, the second module 1' may comprise a plurality of background exhibition panels identified in figure 4 by the reference number 1f. Those background exhibition panels 1f are conceived for the purposes of providing a predefined image background arranged behind the movable panels 1e that can visually enhance the appearance and technical and/or aesthetic features of each panel 1e. Figure 4 shows a configuration wherein the background exhibition panels 1f are present both in the central portion 1c and in the two lateral portions 1l and are placed on the rear portion of the second module 1'. This configuration shall not be intended limiting, since several other configurations may be realized, wherein the background exhibition panel 1f is present only in the central portion 1c, or only in the lateral portions 1l, or only in one of the two lateral portions 1l, or in the central portion 1c and in one of the two lateral portions 1l.

In a preferred embodiment, the second module 1' may be of a modular type, and - as well - the central portion 1c and/or the lateral portions 1l of the second module 1' may be in turn realized as modular portions of the module. With this feature, several configurations with a wide variety of displaying sizes may be realized, and the user may adapt and shrink or widen the size of the second module 1' by simply and easily adding or removing one or more portions from the second module 1'.

In view of the present description, when users want to create a personalized configuration of at least one, preferably several, hydrothermal sanitary components 10a-10d, they perform a method of displaying hereinafter disclosed.

The main step of the method comprises a step of removable engagement, in turn comprising the engagement of at least one hydrothermal sanitary component 10a-10d with the exhibition panel 2 of the first module 1 of the display system. The engagement takes place by means of retention means 4, 11 being part either of the exhibition panel 2 or (as in case of the magnets arranged on the rear surface of each of the hydrothermal sanitary components 10a-10d) of the hydrothermal sanitary component 10a-10d. Those retention means are configured to realize the aforementioned removable connection.

It is underlined that the step of removable engagement with the hydrothermal sanitary components 10a-10d, when these latter are removably engaged with the exhibition panel 2, determines a user-defined and re-definable pattern or spatial configuration of the hydrothermal sanitary components 10a-10d. The purpose of the aforementioned step of removable engagement is to provide a simulation of a real installation of the hydrothermal sanitary components in an operating environment, such as a bathroom or similar.

In an embodiment, the step of removable engagement is preceded by a step which comprises arranging the exhibition panel 2 at a spatial orientation such that it lays on a plane which is substantially inclined with respect to the horizontal plane, and - preferably - lies on a plane which is substantially vertical.

When the retention means 4 are of a magnetic type, the step of removable engagement comprises a step of magnetic removable engagement between at least one of the hydrothermal sanitary components 10a-10d and the exhibition panel 2. Said step in detail comprises magnetically coupling at least one of said hydrothermal sanitary components 10a-10d to a front face of the exhibition panel 2, preferably but in a non-limiting extent by coupling a magnetic retention element 4 arranged on a back surface of the hydrothermal sanitary component 10a-10d with the front face of the exhibition panel 2.

Alternatively, when the magnetic force is actively performed by the exhibition panel 2, the magnetic removable engagement takes place by magnetically coupling at least one of said hydrothermal sanitary components 10a-10d to a magnetic face of the exhibition panel 2 or to a magnetic retention element 11 arranged at the exhibition panel 2.

In a further alternative solution, when the magnetic engagement is not the technical solution adopted for performing the aforementioned removable engagement, the step of removable engagement comprises mechanically coupling at least one of said hydrothermal sanitary components 10a-10d to a front face of the exhibition panel 2 through at least one hooking element 4 arranged on the front face of the exhibition panel 2.

It may be noted that the step of removable engagement comprises the engagement of at least one hydrothermal sanitary component 10a-10d with the exhibition panel 2 is performed by making reference to, or equivalently with respect to, a plurality of marking elements 3 arranged at specific positions on the exhibition panel 2, optionally at a front surface of the exhibition panel 2 and/or visually detectable on the front surface of the exhibition panel 2, such that the proper arrangement of said hydrothermal sanitary component 10a-10d is realized also with respect to a predefined visual aiding pattern.

Of course before the removable engagement, the user performs a step of selection of at least one hydrothermal sanitary component 10a-10d from a second module 1', and the selection may be performed from one or more of the movable panels 1e or from one or more of the drawers 1d which may be present on the second module 1'.

Specifically referring to the selection from the movable panels 1e, the step of selection - in a non-limiting embodiment - comprises:
- moving at least one movable panel 1e of the second module 1', wherein the movable panel 1e comprises a displaying surface at which at least one hydrothermal sanitary component 10a-10d is removably engaged, between a first spatial orientation corresponding to a first configuration of the second module 1') optionally in which the displaying surface mainly extends orthogonally to a depth axis of said second module 1' and frontally with respect to a user of the second module 1', and a second spatial orientation rotated, preferably substantially orthogonally, with respect to the first spatial orientation and corresponding to a second configuration of the second module 1', optionally in which the displaying surface extends parallel to the depth axis of said second module 1', and/or
- comprises moving at least one movable panel 1e of the second module 1' between a first position at a first distance with respect to a lateral end of the second module 1' and a second position at a second distance, different from the first distance, with respect to the lateral end of the second module 1', optionally by translation,
- comprises moving at least one movable panel 1e of the second module 1' by making it perform a composite movement comprising with respect to a vertical axis thereof and/or a translation in a direction substantially orthogonal to said vertical axis.

The step of selection thus ends with a physical disconnection of the selected hydrothermal sanitary component 10a-10d from the movable panel 1e.

Should the marking elements 3 be realized as a light-emitting elements or module, as above described, the method may comprise the step of configuring, or switching, said at least one light-emitting module in the second operative configuration, to create a lighted, visible, pattern, throughout the exhibition panel 2, in particular at least when the user is arranged substantially in front of the exhibition panel 2.

It may be noted that the system and method according to the present disclosure do not prevent using an interior design software program or an environment simulation software program specifically conceived to produce in output an overall configuration or rendering of an equipped bathroom or part of a bathroom. The system and method of the present disclosure may be thus used also in association with this software program, in order to check if actually the aesthetic appearance of the items arranged in the virtual bathroom of the software provide the same impression to the user if actually adopted, and in order to check if the real simulation of the real installation of the hydrothermal sanitary components in an operating environment actually produces a result which is comparable (or not) with the simulation obtained through the software.

It may be noted that the invention is not limited to the embodiments represented in the drawings. It is thus clear that the reference signs put between parentheses that appear in the following claims for identifying specific items are provided for the sole purpose of increasing the intelligibility of the claims, and shall not be intended as limiting the scope of protection thereof.

It is finally clear that to the object of the claims several adaptations and additions may be carried out by a skilled person without for this departing from the scope of protection provided by the annexed claims.

## Claims

1. A display kit comprising:
- at least one, preferably a plurality of, hydrothermal sanitary components (10a-10d), optionally wherein said at least one, preferably a plurality of, hydrothermal sanitary components (10a-10d) is a full-scale model replicating the visible part of the real, operative, corresponding component or a part of the real, operative, corresponding component, and
- a display system (1, 1') for the at least one hydrothermal sanitary components (10a-10d), comprising:
at least a first device or module (1), comprising an exhibition panel (2) configured to lay, in use, at least partially on a plane substantially inclined with respect to a horizontal plane and destined and configured to support a plurality of hydrothermal sanitary components (10a-10d); and
retention means (2f, 4, 10p, 11) configured to realize a removable connection between the exhibition panel (2) and the hydrothermal sanitary components (10a-10d), the retention means (2f, 4, 10p, 11) being further destined and configured to allow a repeated multiple re-arrangement of the hydrothermal sanitary components (10a-10d) on the exhibition panel (2) according to a plurality of user-defined and re-definable patterns or spatial configurations, simulating a real installation of said hydrothermal sanitary components (10a-10d) in an operating environment, such as a bathroom or similar,
wherein said retention means (2f, 4, 10p, 11) comprise at least a respective first retention element (4) irremovably engaged to a respective hydrothermal sanitary component (10a-10d), and wherein at least one front surface of the exhibition panel (2) is specifically configured and destined to directly contact and interact with at least a part of the first retention element (4) to realize said removable connection.

2. A display kit according to claim 1, wherein:
- the first module (1) is a floor standing module, and is provided with a supporting frame configured to be laid, or fixed, to the ground, the supporting frame being configured to support said exhibition panel (2), and/or wherein
- the exhibition panel (2) is arranged and configured to lay, in use, at least partially on a plane which is substantially vertical with respect to the ground;
- the exhibition panel (2) has a substantially planar structure and/or has a substantially planar front face,
- the exhibition panel (2) comprises an outer perimeter,
- the user-defined and re-definable pattern or spatial configuration is realized within the outer perimeter and wherein the retention means (2f, 4, 10p, 11) are destined and configured to allow the user to arrange, and repeatedly re-arrange multiple times, the hydrothermal sanitary components (10a-10d) on the exhibition panel (2) in any position within the outer perimeter.

3. A display kit according to claim 1 or 2, wherein said retention means (2f, 4, 10p, 11) are provided with at least a second retention element (11) which is attached, optionally irremovably attached, or is part of, or is realized integrally with, or is, the exhibition panel (2), the second retention element (11) being configured and destined to interact with a hydrothermal sanitary component (10a-10d) or with at least a first retention element (4) coupled to a hydrothermal sanitary component (10a-10d) to realize said removable connection.

4. A display kit according to claim 3, wherein the first retention element (4) and/or the second retention element (11) comprise at least one magnetic and/or at least one magnetically attractable element and/or wherein the second retention element (11) extends substantially along the entire surface of the exhibition panel (2) or wherein the exhibition panel (2) comprises a plurality of second retention elements (11) arranged according to a predefined pattern or spatial configuration on said exhibition panel (2), preferably reciprocally spaced and/or equally spaced.

5. A display kit according to one or more of the preceding claims, wherein the exhibition panel (2) comprises a plurality of marking elements (3) arranged at specific positions on the exhibition panel (2), optionally at a front surface of the exhibition panel (2) and/or visually detectable on the front surface of the exhibition panel (2), the plurality of marking elements (3) realizing a predefined visual aiding pattern helping an arrangement of at least one hydrothermal sanitary component (10a-10d) on the exhibition panel (2),
optionally wherein the marking elements (3) comprise or are at least part of the second retention elements (11) or wherein the marking elements (3) differ, in particular spatially differ, from the second retention elements (11), or can be physically detached from the second retention elements (11).

6. A display kit according to one or more of the preceding claims, further comprising a second device or module (1') configured for removably housing a plurality of hydrothermal sanitary components (10a-10d) according to a predefined displaying pattern or configuration, preferably grouped per category and/or type, the second module (1') comprising at least one movable panel (1e) having a displaying surface at which at least one of said plurality of hydrothermal sanitary components (10a-10d) is removably held, and wherein:
- the movable panel (1e) can be arranged at least: in a first spatial orientation corresponding to a first configuration of the second module (1'), optionally in which the displaying surface mainly extends orthogonally to a depth axis of said second module (1') and frontally with respect to a user of the second module (1'); and in a second spatial orientation rotated, preferably substantially orthogonally, with respect to the first spatial orientation and corresponding to a second configuration of the second module (1'), optionally in which the displaying surface extends parallel to the depth axis of said second module (1'), and/or wherein the movable panel (1e) can be arranged at least in correspondence of a first position at a first distance with respect to a lateral end of the second module (1') and in correspondence of a second position at a second distance, different from the first distance, with respect to the lateral end of the second module (1'), optionally by translation,
- and/or wherein the movable panel (1e) can be moved in a composite movement comprising a rotation with respect to a vertical axis thereof and/or a translation in a direction substantially orthogonal to said vertical axis.

7. A display kit according to claim 6, further comprising retention means (2f, 4, 10p, 11) configured to realize a removable connection between the movable panel (1e) and the hydrothermal sanitary components (10a-10d),
said retention means (2f, 4, 10p, 11) being provided with at least a second retention element (11) which is attached, optionally irremovably attached, or is part of, or is realized integrally with, or is, the movable panel (1e), the second retention element (11) being configured and destined to interact with a hydrothermal sanitary component (10a-10d) or with at least a first retention element (4) coupled to a hydrothermal sanitary component (10a-10d) to realize said removable connection.

8. A display kit according to claim 6 or claim 7, wherein the second module (1') is a floor standing module provided with a supporting frame housing and/or realizing at least one rail (1r) configured for allowing the motion of the panel (1e) at least between the first and the second spatial orientation and/or at least between the first position and the second position, and/or wherein the at least one rail (1r) is configured for allowing the rotation of the movable panel (1e) around its vertical axis at least from the first spatial orientation to the second spatial orientation.

9. A display kit according to one or more of the preceding claims excluding claim 4,
- wherein the retention means (2f, 4, 10p, 11) are configured to realize a bayonet-like connection, in particular a bayonet-like removable connection, between the exhibition panel (2) and the hydrothermal sanitary component (10a-10d), and wherein the retention means (2f, 4, 10p, 11) comprise at least one shaped though hole (2f) practiced on said exhibition panel (2); the shaped through hole (2f) being configured to couple, in use, with a retention pin (10p) arranged at a portion, optionally a rear portion, of the hydrothermal sanitary component (10a-10d),
- or wherein the retention means (2f, 4, 10p, 11) comprise at least one retention pin (10p) arranged on the exhibition panel (2), optionally protruding from a front surface of the exhibition panel (2), the retention pin (10p) being configured to couple, in use, with a shaped through hole (2f) practiced on a portion, optionally a rear portion, of the hydrothermal sanitary component (10a-10d),
- or wherein the retention means (2f, 4, 10p, 11) comprise at least one retention pin (10p) arranged on the exhibition panel (2), optionally protruding from a front surface of the exhibition panel (2), the retention pin (10p) being configured to couple, in use, with a shaped through hole (2f) practiced on a compensation element (10t) arranged between exhibition panel (2) and the hydrothermal sanitary component (10a-10d) and configured to compensate a local distortion or deformation or inclination of said exhibition panel (2), optionally configured to compensate the local distortion or deformation or inclination for a predetermined compensation angle (*α*), optionally wherein said compensation angle (*α*) at least partially compensates a distortion or deformation or inclination angle (*β*) locally assumed by the exhibition panel (2) due to a weight and/or a lever force at least locally exerted on the exhibition panel (2) by the hydrothermal sanitary element (10a-10d),
- or wherein the retention means (2f, 4, 10p, 11) comprise at least one shaped though-hole (2f) practiced on said exhibition panel (2); the shaped through hole (2f) being configured to couple, in use, with a retention pin (10p) arranged at a portion, optionally a rear portion, of a compensation element (10t) arranged between exhibition panel (2) and the hydrothermal sanitary component (10a-10d) and configured to compensate a local distortion or deformation or inclination of said exhibition panel (2), optionally configured to compensate the local distortion or deformation or inclination of said exhibition panel (2) for a predetermined compensation angle (*α*), optionally wherein said compensation angle (a) at least partially compensates a distortion or deformation or inclination angle (*β*) locally assumed by the exhibition panel (2) due to a weight and/or a lever force at least locally exerted on the exhibition panel (2) by the hydrothermal sanitary element (10a-10d).

10. Use of a display kit according to one or more of the preceding claims to arrange a plurality of hydrothermal sanitary components (10a-10d) on the exhibition panel (2) according to at least one user-defined and re-definable pattern or spatial configuration, simulating a real installation of said hydrothermal sanitary components (10a-10d) in an operating environment, such as a bathroom or similar.

11. A method for displaying hydrothermal sanitary components (10a-10d) with a display kit according to one or more of the preceding claims 1-9, the method comprising at least a step of removable engagement of at least one hydrothermal sanitary component (10a-10d) with an exhibition panel (2) of a first module (1) of a display system (1, 1') by retention means (2f, 4, 10p, 11) comprising a respective first retention element (4) configured and destined to be irremovably engaged to a respective hydrothermal sanitary component (10a-10d), wherein the retention means (2f, 4, 10p, 11) are configured to realize a removable connection between the exhibition panel (2) and the hydrothermal sanitary components (10a-10d), wherein the exhibition panel (2) is specifically destined and configured for supporting a plurality of hydrothermal sanitary components (10a-10d), and comprises a front surface specifically configured and destined to directly contact and interact with at least part of the first retention element to realize said removable connection; and
wherein the step of removable engagement, when the hydrothermal sanitary components (10a-10d) are removably engaged with the exhibition panel (2), determines a user-defined and re-definable pattern or spatial configuration of the hydrothermal sanitary components (10a-10d) on the exhibition panel (2) simulating a real installation of said hydrothermal sanitary components (10a-10d) in an operating environment, such as a bathroom or similar.

12. The method of claim 11, wherein the step of removable engagement comprises magnetically coupling at least one of said hydrothermal sanitary components (10a-10d) to a front face of the exhibition panel (2), optionally by coupling a magnetic retention element (4) arranged on a back surface of said hydrothermal sanitary component (10a-10d) with the front face of the exhibition panel (2), or comprises magnetically coupling at least one of said hydrothermal sanitary components (10a-10d) to a magnetic face of the exhibition panel (2) or to a magnetic retention element (11) arranged at the exhibition panel (2) or comprises mechanically coupling at least one of said hydrothermal sanitary components (10a-10d) to a front face of the exhibition panel (2) by at least one hooking element (4) arranged on the front face of the exhibition panel (2).

13. The method of claims 11 or 12, wherein the step of removable engagement comprises arranging and repeatedly re-arranging multiple times the pattern or spatial configuration of the hydrothermal sanitary components (10a-10d) on the exhibition panel and/or wherein the step of removable engagement comprises the engagement of at least one hydrothermal sanitary component (10a-10d) with the exhibition panel (2) of the first module (1) the a display system (1, 1') referring to, or with respect to, a plurality of marking elements (3) arranged at specific positions on the exhibition panel (2), optionally at a front surface of the exhibition panel (2) and/or visually detectable on the front surface of the exhibition panel (2), the plurality of marking elements (3) realizing a predefined visual aiding pattern helping an arrangement of at least one hydrothermal sanitary component (10a-10d) on the exhibition panel (2).

14. The method of one or more of claims 11-13, further comprising a step of selection of at least one hydrothermal sanitary component (10a-10d) from a second module (1') of a display system (1, 1'), the step of selection taking place before the step of removable engagement,
wherein the step of selection comprises at least one of the following steps:
- moving at least one movable panel (1e) of the second module (1'), wherein the movable panel (1e) comprises a displaying surface at which at least one hydrothermal sanitary component (10a-10d) is removably engaged, between a first spatial orientation corresponding to a first configuration of the second module (1'), optionally in which the displaying surface mainly extends orthogonally to a depth axis of said second module (1') and frontally with respect to a user of the second module (1'), and a second spatial orientation rotated, preferably substantially orthogonally, with respect to the first spatial orientation and corresponding to a second configuration of the second module (1'), optionally in which the displaying surface extends parallel to the depth axis of said second module (1'), and/or
- comprises moving at least one movable panel (1e) of the second module (1') between a first position at a first distance with respect to a lateral end of the second module (1') and a second position at a second distance, different from the first distance, with respect to the lateral end of the second module (1'), optionally by translation, and/or
- comprises moving at least one movable panel (1e) of the second module (1') by making it perform a composite movement comprising with respect to a vertical axis thereof and/or a translation in a direction substantially orthogonal to said vertical axis.

## Patentansprüche

1. Display-Kit, umfassend:
- mindestens eine, vorzugsweise eine Mehrzahl von hydrothermalen Sanitärkomponenten (10a-10d), wobei die mindestens eine, vorzugsweise eine Mehrzahl von hydrothermalen Sanitärkomponenten (10a-10d) ein maßstabsgetreues Modell ist, das den sichtbaren Teil der realen, funktionsfähigen, entsprechenden Komponente oder einen Teil der realen, funktionsfähigen, entsprechenden Komponente nachbildet, und
- ein Displaysystem (1, 1') für die mindestens eine hydrothermale Sanitärkomponente (10a-10d), umfassend:
mindestens eine erste Vorrichtung oder Modul (1), die/das eine Ausstellungstafel (2) umfasst, die so konfiguriert ist, dass sie im Gebrauch mindestens teilweise auf einer Ebene liegt, die in Bezug auf eine horizontale Ebene wesentlich geneigt ist, und die dazu bestimmt und konfiguriert ist, eine Mehrzahl von hydrothermalen Sanitärkomponenten (10a-10d) zu tragen; und
Haltemittel (2f, 4, 10p, 11), die so konfiguriert sind, dass sie eine lösbare Verbindung zwischen der Ausstellungstafel (2) und den hydrothermalen Sanitärkomponenten (10a-10d) herstellen, wobei die Haltemittel (2f, 4, 10p, 11) weiterhin dazu bestimmt und konfiguriert sind, eine wiederholte mehrfache Neuanordnung der hydrothermalen Sanitärkomponenten (10a-10d) auf der Ausstellungstafel (2) gemäß einer Mehrzahl von benutzerdefinierten und neu definierbaren Mustern oder räumlichen Konfigurationen zu ermöglichen, die eine reale Installation der hydrothermalen Sanitärkomponenten (10a-10d) in einer Betriebsumgebung, wie einem Badezimmer oder ähnlichem, simulieren,
wobei die Haltemittel (2f, 4, 10p, 11) mindestens ein jeweiliges erstes Halteelement (4) umfassen, das unlösbar mit einer jeweiligen hydrothermalen Sanitärkomponente (10a-10d) in Eingriff steht, und wobei mindestens eine Frontfläche der Ausstellungstafel (2) spezifisch konfiguriert und dazu bestimmt ist, mindestens einen Teil des ersten Halteelements (4) direkt zu kontaktieren und mit diesem zusammenzuwirken, um die lösbare Verbindung zu realisieren.

2. Display-Kit nach Anspruch 1, wobei:
- das erste Modul (1) ein bodenstehendes Modul ist und mit einem Stützrahmen versehen ist, der so konfiguriert ist, dass er auf den Boden gelegt oder daran befestigt werden kann, wobei der Stützrahmen so konfiguriert ist, dass er die Ausstellungstafel (2) stützt, und/oder wobei
- die Ausstellungstafel (2) so angeordnet und konfiguriert ist, dass sie im Gebrauch zumindest teilweise auf einer Ebene liegt, die in Bezug auf den Boden im Wesentlichen vertikal ist;
- die Ausstellungstafel (2) eine im Wesentlichen planare Struktur und/oder eine im Wesentlichen planare Frontseite aufweist,
- die Ausstellungstafel (2) einen äußeren Umfang aufweist,
- das benutzerdefinierte und neu definierbare Muster oder die räumliche Konfiguration innerhalb des äußeren Umfangs realisiert wird und wobei die Haltemittel (2f, 4, 10p, 11) dazu bestimmt und konfiguriert sind, dass sie es dem Benutzer ermöglichen, die hydrothermalen Sanitärkomponenten (10a-10d) auf der Ausstellungstafel (2) in beliebiger Position innerhalb des äußeren Umfangs anzuordnen und wiederholt mehrfach neu anzuordnen.

3. Display-Kit nach Anspruch 1 oder 2, wobei die Haltemittel (2f, 4, 10p, 11) mit mindestens einem zweiten Halteelement (11) versehen sind, das an der Ausstellungstafel (2) befestigt, gegebenenfalls unlösbar befestigt, Teil der Ausstellungstafel (2) ist oder integral mit dieser realisiert ist, oder die Ausstellungstafel (2) ist, wobei das zweite Halteelement (11) dazu konfiguriert und bestimmt ist, dass es mit einer hydrothermalen Sanitärkomponente (10a-10d) oder mit mindestens einem ersten Halteelement (4), das mit einer hydrothermalen Sanitärkomponente (10a-10d) gekoppelt ist, zusammenwirkt, um die lösbare Verbindung zu realisieren.

4. Display-Kit nach Anspruch 3, wobei das erste Halteelement (4) und/oder das zweite Halteelement (11) mindestens ein magnetisches und/oder mindestens ein magnetisch anziehbares Element umfasst, und/oder wobei sich das zweite Halteelement (11) im Wesentlichen entlang der gesamten Oberfläche der Ausstellungstafel (2) erstreckt, oder wobei die Ausstellungstafel (2) eine Mehrzahl von zweiten Halteelementen (11) umfasst, die gemäß einem vordefinierten Muster oder einer räumlichen Konfiguration auf der Ausstellungstafel (2) angeordnet sind, vorzugsweise mit gegenseitigem Abstand und/oder mit gleichem Abstand.

5. Display-Kit nach einem oder mehreren der vorhergehenden Ansprüche, wobei die Ausstellungstafel (2) eine Mehrzahl von Markierungselementen (3) umfasst, die an bestimmten Positionen auf der Ausstellungstafel (2), optional an einer Frontfläche der Ausstellungstafel (2), angeordnet und/oder an der Frontfläche der Ausstellungstafel (2) visuell erkennbar sind, wobei die Mehrzahl von Markierungselementen (3) ein vordefiniertes visuelles Hilfsmuster realisieren, das bei einer Anordnung von mindestens einer hydrothermalen Sanitärkomponente (10a-10d) auf der Ausstellungstafel (2) hilft,
optional wobei die Markierungselemente (3) die zweiten Halteelemente (11) umfassen oder zumindest ein Teil davon sind oder wobei sich die Markierungselemente (3) von den zweiten Halteelementen (11) unterscheiden, insbesondere räumlich unterscheiden, oder physisch von den zweiten Halteelementen (11) gelöst werden können.

6. Display-Kit nach einem oder mehreren der vorhergehenden Ansprüche, ferner umfassend eine zweite Vorrichtung oder Modul (1'), die/das zur entnehmbaren Unterbringung einer Mehrzahl von hydrothermalen Sanitärkomponenten (10a-10d) gemäß einem vordefinierten Anzeigemuster oder einer Konfiguration, vorzugsweise gruppiert nach Kategorie und/oder Typ, konfiguriert ist, wobei das zweite Modul (1') mindestens eine bewegliche Platte (1e) mit einer Anzeigefläche umfasst, an der mindestens eine der Mehrzahl von hydrothermalen Sanitärkomponenten (10a-10d) lösbar gehalten wird, und wobei:
- die bewegliche Platte (1e) zumindest wie folgt angeordnet werden kann:
in einer ersten räumlichen Ausrichtung, die einer ersten Konfiguration des zweiten Moduls (1') entspricht, optional, in der sich die Anzeigefläche hauptsächlich orthogonal zu einer Tiefenachse des zweiten Moduls (1') und frontal in Bezug auf einen Benutzer des zweiten Moduls (1') erstreckt;
und in einer zweiten räumlichen Ausrichtung, die in Bezug auf die erste räumliche Ausrichtung gedreht ist, vorzugsweise im Wesentlichen orthogonal, und die einer zweiten Konfiguration des zweiten Moduls (1') entspricht, wobei sich die Anzeigefläche optional parallel zu der Tiefenachse des zweiten Moduls (1') erstreckt, und/oder wobei die bewegliche Platte (1e) zumindest in Übereinstimmung mit einer ersten Position in einem ersten Abstand in Bezug auf ein seitliches Ende des zweiten Moduls (1') und in Übereinstimmung mit einer zweiten Position in einem zweiten Abstand, der sich von dem ersten Abstand unterscheidet, in Bezug auf das seitliche Ende des zweiten Moduls (1') angeordnet werden kann, gegebenenfalls durch Translation,
- und/oder wobei die bewegliche Platte (1e) in einer zusammengesetzten Bewegung bewegt werden kann, die eine Rotation in Bezug auf eine vertikale Achse davon und/oder eine Translation in einer Richtung im Wesentlichen orthogonal zu der vertikalen Achse umfasst.

7. Display-Kit nach Anspruch 6, ferner umfassend Haltemittel (2f, 4, 10p, 11), die so konfiguriert sind, dass sie eine lösbare Verbindung zwischen der beweglichen Platte (1e) und den hydrothermalen Sanitärkomponenten (10a-10d) herstellen,
wobei die Haltemittel (2f, 4, 10p, 11) mit mindestens einem zweiten Halteelement (11) versehen sind, das an der beweglichen Platte (1e) befestigt ist, optional unlösbar befestigt ist, oder Teil der beweglichen Platte (1e) ist, oder integral mit dieser realisiert ist, oder die bewegliche Platte (1e) ist, wobei das zweite Halteelement (11) dazu konfiguriert und bestimmt ist, dass es mit einer hydrothermalen Sanitärkomponente (10a-10d) oder mit mindestens einem ersten Halteelement (4), das mit einer hydrothermalen Sanitärkomponente (10a-10d) gekoppelt ist, zusammenwirkt, um die lösbare Verbindung zu realisieren.

8. Display-Kit nach Anspruch 6 oder Anspruch 7, wobei das zweite Modul (1') ein bodenstehendes Modul ist, das mit einem Stützrahmengehäuse versehen ist und/oder mindestens eine Schiene (1r) realisiert, die so konfiguriert ist, dass sie die Bewegung der Platte (1e) mindestens zwischen der ersten und der zweiten räumlichen Ausrichtung und/oder mindestens zwischen der ersten Position und der zweiten Position ermöglicht, und/oder wobei die mindestens eine Schiene (1r) so konfiguriert ist, dass sie die Drehung der beweglichen Platte (1e) um ihre vertikale Achse mindestens von der ersten räumlichen Ausrichtung zur zweiten räumlichen Ausrichtung ermöglicht.

9. Display-Kit nach einem oder mehreren der vorhergehenden Ansprüche mit Ausnahme von Anspruch 4,
- wobei die Haltemittel (2f, 4, 10p, 11) so konfiguriert sind, dass sie eine bajonettartige Verbindung, insbesondere eine bajonettartige lösbare Verbindung, zwischen der Ausstellungstafel (2) und der hydrothermalen Sanitärkomponente (10a-10d) realisieren, und wobei die Haltemittel (2f, 4, 10p, 11) mindestens ein geformtes Durchgangsloch (2f) umfassen, das an der Ausstellungstafel (2) ausgebildet ist; wobei das geformte Durchgangsloch (2f) so konfiguriert ist, dass es im Gebrauch mit einem Haltestift (10p) gekoppelt ist, der an einem Abschnitt, optional einem hinteren Abschnitt, der hydrothermalen Sanitärkomponente (10a-10d) angeordnet ist,
- oder wobei die Haltemittel (2f, 4, 10p, 11) mindestens einen Haltestift (10p) umfassen, der an der Ausstellungstafel (2) angeordnet ist und optional von einer Frontfläche der Ausstellungstafel (2) vorsteht, wobei der Haltestift (10p) so konfiguriert ist, dass er im Gebrauch mit einem geformten Durchgangsloch (2f) koppelt, das an einem Abschnitt, optional einem hinteren Abschnitt, der hydrothermalen Sanitärkomponente (10a-10d) ausgebildet ist,
- oder wobei die Haltemittel (2f, 4, 10p, 11) mindestens einen Haltestift (10p) umfassen, der an der Ausstellungstafel (2) angeordnet ist und optional von einer Frontfläche der Ausstellungstafel (2) vorsteht, wobei der Haltestift (10p) so konfiguriert ist, dass er im Gebrauch mit einem geformten Durchgangsloch (2f) koppelt, das an einem Kompensationselement (10t) ausgebildet ist, das zwischen der Ausstellungstafel (2) und der hydrothermalen Sanitärkomponente (10a-10d) angeordnet ist, und dazu konfiguriert ist, eine lokale Verzerrung oder Verformung oder Neigung der Ausstellungstafel (2) zu kompensieren, optional dazu konfiguriert, die lokale Verzerrung oder Verformung oder Neigung um einen vorbestimmten Kompensationswinkel (α) zu kompensieren, wobei der Kompensationswinkel (α) optional zumindest teilweise eine Verzerrung oder Verformung oder einen Neigungswinkel (β) kompensiert, die/der lokal von der Ausstellungstafel (2) aufgrund eines Gewichts und/oder einer Hebelkraft angenommen wird, die zumindest lokal auf die Ausstellungstafel (2) durch das hydrothermale Sanitärelement (10a-10d) ausgeübt wird,
- oder wobei die Haltemittel (2f, 4, 10p, 11) mindestens ein geformtes Durchgangsloch (2f) umfassen, das an der Ausstellungstafel (2) ausgebildet ist; wobei das geformte Durchgangsloch (2f) dazu konfiguriert ist, dass es im Gebrauch mit einem Haltestift (10p) koppelt, der an einem Abschnitt, optional einem hinteren Abschnitt, eines Kompensationselements (10t) angeordnet ist, das zwischen der Ausstellungstafel (2) und der hydrothermalen Sanitärkomponente (10a-10d) angeordnet ist und so konfiguriert ist, dass es eine lokale Verzerrung oder Verformung oder Neigung der Ausstellungstafel (2) kompensiert, optional dazu konfiguriert, um die lokale Verzerrung oder Verformung oder Neigung der Ausstellungstafel (2) um einen vorbestimmten Kompensationswinkel (α) zu kompensieren, wobei der Kompensationswinkel (α) optional zumindest teilweise eine Verzerrung oder Verformung oder einen Neigungswinkel (β) kompensiert, die/der lokal von der Ausstellungstafel (2) aufgrund eines Gewichts und/oder einer Hebelkraft angenommen wird, die zumindest lokal auf die Ausstellungstafel (2) durch die hydrothermale Sanitärkomponente (10a-10d) ausgeübt wird.

10. Verwendung eines Display-Kits nach einem oder mehreren der vorhergehenden Ansprüche, um eine Mehrzahl von hydrothermalen Sanitärkomponenten (10a-10d) auf der Ausstellungstafel (2) gemäß mindestens einem benutzerdefinierten und neu definierbaren Muster oder einer räumlichen Konfiguration anzuordnen, wobei eine reale Installation der hydrothermalen Sanitärkomponenten (10a-10d) in einer Betriebsumgebung, wie z.B. einem Badezimmer oder ähnlichem, simuliert wird.

11. Verfahren zum Ausstellen von hydrothermalen Sanitärkomponenten (10a-10d) mit einem Display-Kit nach einem oder mehreren der vorhergehenden Ansprüche 1-9, wobei das Verfahren mindestens einen Schritt des lösbaren Eingriffs von mindestens einer hydrothermalen Sanitärkomponente (10a-10d) mit einer Ausstellungstafel (2) eines ersten Moduls (1) eines Displaysystems (1, 1') durch Haltemittel (2f, 4, 10p, 11) umfasst, die ein jeweiliges erstes Halteelement (4) umfassen, das dazu konfiguriert und bestimmt ist, dass es mit einer jeweiligen hydrothermalen Sanitärkomponente (10a-10d) unlösbar in Eingriff gebracht werden kann, wobei die Haltemittel (2f, 4, 10p, 11) so konfiguriert sind, dass sie eine lösbare Verbindung zwischen der Ausstellungstafel (2) und den hydrothermalen Sanitärkomponenten (10a-10d) realisieren, wobei die Ausstellungstafel (2) speziell dazu bestimmt und konfiguriert ist, eine Mehrzahl von hydrothermalen Sanitärkomponenten (10a-10d) zu tragen, und eine Frontfläche umfasst, die speziell dazu konfiguriert und bestimmt ist, dass sie direkt mit mindestens einem Teil des ersten Halteelements in Kontakt kommt und mit diesem zusammenwirkt, um die lösbare Verbindung zu realisieren; und
wobei der Schritt des lösbaren Eingriffs, wenn die hydrothermalen Sanitärkomponenten (10a-10d) lösbar mit der Ausstellungstafel (2) in Eingriff gebracht werden, ein benutzerdefiniertes und neu definierbares Muster oder eine räumliche Konfiguration der hydrothermalen Sanitärkomponenten (10a-10d) auf der Ausstellungstafel (2) bestimmt, die eine reale Installation der hydrothermalen Sanitärkomponenten (10a-10d) in einer Betriebsumgebung, wie z.B. einem Badezimmer oder ähnlichem, simuliert.

12. Verfahren nach Anspruch 11, wobei der Schritt des lösbaren Eingriffs eine magnetische Kopplung mindestens einer der hydrothermalen Sanitärkomponenten (10a-10d) mit einer Frontseite der Ausstellungstafel (2) umfasst, optional durch Kopplung eines magnetischen Halteelements (4), das auf einer Rückfläche der hydrothermalen Sanitärkomponente (10a-10d) angeordnet ist, mit der Frontseite der Ausstellungstafel (2), oder eine magnetische Kopplung mindestens einer der hydrothermalen Sanitärkomponenten (10a-10d) mit einer Magnetfläche der Ausstellungstafel (2) oder mit einem an der Ausstellungstafel (2) angeordneten magnetischen Halteelement (11) umfasst, oder eine mechanische Kopplung mindestens einer der hydrothermalen Sanitärkomponenten (10a-10d) mit einer Frontseite der Ausstellungstafel (2) durch mindestens ein an der Frontseite der Ausstellungstafel (2) angeordnetes Hakenelement (4) umfasst.

13. Verfahren nach Anspruch 11 oder 2, wobei der Schritt des lösbaren Eingriffs das Anordnen und wiederholte mehrmalige Neuanordnen des Musters oder der räumlichen Konfiguration der hydrothermalen Sanitärkomponenten (10a-10d) auf der Ausstellungstafel umfasst und/oder wobei der Schritt des lösbaren Eingriffs den Eingriff mindestens einer hydrothermalen Sanitärkomponente (10a-10d) mit der Ausstellungstafel (2) des ersten Moduls (1) des Displaysystems (1, 1') unter Bezugnahme auf oder in Bezug auf eine Mehrzahl von Markierungselementen (3) umfasst, die an bestimmten Positionen auf der Ausstellungstafel (2), optional an einer Frontfläche der Ausstellungstafel (2), angeordnet und/oder auf der Frontfläche der Ausstellungstafel (2) visuell erkennbar sind, wobei die Mehrzahl von Markierungselementen (3) ein vordefiniertes visuelles Hilfsmuster realisieren, das bei einer Anordnung von mindestens einer hydrothermalen Sanitärkomponente (10a-10d) auf der Ausstellungstafel (2) hilft.

14. Verfahren nach einem oder mehreren der Ansprüche 11 bis 13, das ferner einen Schritt des Auswählens mindestens einer hydrothermalen Sanitärkomponente (10a bis 10d) aus einem zweiten Modul (1') eines Displaysystems (1, 1') umfasst, wobei der Schritt des Auswählens vor dem Schritt des lösbaren Eingriffs stattfindet,
wobei der Schritt des Auswählens mindestens einen der folgenden Schritte umfasst:
- Bewegen mindestens einer beweglichen Platte (1e) des zweiten Moduls (1'), wobei die bewegliche Platte (1e) eine Anzeigefläche umfasst, an der mindestens eine hydrothermale Sanitärkomponente (10a-10d) lösbar in Eingriff gebracht ist, zwischen einer ersten räumlichen Ausrichtung, die einer ersten Konfiguration des zweiten Moduls (1') entspricht, optional in der sich die Anzeigefläche hauptsächlich orthogonal zu einer Tiefenachse des zweiten Moduls (1') und frontal in Bezug auf einen Benutzer des zweiten Moduls (1') erstreckt, und einer zweiten räumlichen Ausrichtung, die in Bezug auf die erste räumliche Ausrichtung gedreht ist, vorzugsweise im Wesentlichen orthogonal, und die einer zweiten Konfiguration des zweiten Moduls (1') entspricht, optional in der sich die Anzeigefläche parallel zu der Tiefenachse des zweiten Moduls (1') erstreckt, und/oder
- das Bewegen mindestens einer beweglichen Platte (1e) des zweiten Moduls (1') zwischen einer ersten Position in einem ersten Abstand in Bezug auf ein seitliches Ende des zweiten Moduls (1') und einer zweiten Position in einem zweiten Abstand, der sich von dem ersten Abstand unterscheidet, in Bezug auf das seitliche Ende des zweiten Moduls (1'), gegebenenfalls durch Translation, und/oder
- das Bewegen mindestens einer beweglichen Platte (1e) des zweiten Moduls (1'), indem man sie eine zusammengesetzte Bewegung ausführen lässt, umfassend in Bezug auf eine vertikale Achse davon und/oder eine Translation in einer im Wesentlichen orthogonalen Richtung zu der vertikalen Achse.

## Revendications

1. Kit d'affichage comprenant :
- au moins un, préférablement une pluralité de, composant·s sanitaire·s hydrothermique·s (10a-10d), éventuellement dans lequel ledit au moins un, préférablement une pluralité de, composant·s sanitaire·s hydrothermique·s (10a-10d) est un modèle de pleine grandeur répliquant la partie visible du composant correspondant, fonctionnel, réel ou une partie du composant correspondant, fonctionnel, réel et
- un système d'affichage (1, 1') pour le au moins un composants sanitaires hydrothermiques (10a-10d), comprenant :
au moins un premier dispositif ou module (1), comprenant un panneau d'exposition (2) configuré pour reposer, durant l'utilisation, au moins partiellement sur un plan sensiblement incliné par rapport à un plan horizontal et destiné et configuré pour supporter une pluralité de composants sanitaires hydrothermiques (10a-10d) ; et
des moyens de retenue (2f, 4, 10p, 11) configurés pour réaliser un raccordement amovible entre le panneau d'exposition (2) et les composants sanitaires hydrothermiques (10a-10d), les moyens de retenue (2f, 4, 10p, 11) étant en outre destinés à, et configurés pour, permettre un réagencement multiple répété des composants sanitaires hydrothermiques (10a-10d) sur le panneau d'exposition (2) selon une pluralité de profils ou de configurations spatiaux·ales définis es par l'utilisateur et pouvant être redéfinis·es, simulant une installation réelle desdits composants sanitaires hydrothermiques (10a-10d) dans un environnement de travail, tel qu'une salle de bain ou similaire,
dans lequel lesdits moyens de retenue (2f, 4, 10p, 11) comprennent au moins un premier élément de retenue (4) respectif engagé de manière non amovible vis-à-vis d'un composant sanitaire hydrothermique (10a-10d) respectif, et dans lequel au moins une surface avant du panneau d'exposition (2) est spécifiquement configurée et destinée à entrer en contact et interagir directement avec au moins une partie du premier élément de retenue (4) pour réaliser ledit raccordement amovible.

2. Kit d'affichage selon la revendication 1, dans lequel :
- le premier module (1) est un module reposant sur le sol, et est pourvu d'un châssis de support configuré pour être déposé, ou fixé, au sol, le châssis de support étant configuré pour supporter ledit panneau d'exposition (2), et/ou dans lequel
- le panneau d'exposition (2) est agencé et configuré pour reposer, durant l'utilisation, au moins partiellement sur un plan qui est sensiblement vertical par rapport au sol ;
- le panneau d'exposition (2) présente une structure sensiblement plane et/ou présente une face avant sensiblement plane,
- le panneau d'exposition (2) comprend un périmètre externe,
- le profil ou la configuration spatial·e défini·e par l'utilisateur et pouvant être redéfini·e est réalisé·e à l'intérieur du périmètre externe et dans lequel les moyens de retenue (2f, 4, 10p, 11) sont destinés et configurés pour permettre à l'utilisateur d'agencer, et de réagencer de manière répétée de multiples fois, les composants sanitaires hydrothermiques (10a-10d) sur le panneau d'exposition (2) dans n'importe quelle position à l'intérieur du périmètre externe.

3. Kit d'affichage selon la revendication 1 ou 2, dans lequel lesdits moyens de retenue (2f, 4, 10p, 11) sont pourvus d'au moins un second élément de retenue (11) qui est fixé, éventuellement fixé de manière non amovible, ou qui est une partie du, ou est réalisé solidaire du, ou est le, panneau d'exposition (2), le second élément de retenue (11) étant configuré et destiné à interagir avec un composant sanitaire hydrothermique (10a-10d) ou avec au moins un premier élément de retenue (4) accouplé à un composant sanitaire hydrothermique (10a-10d) pour réaliser ledit raccordement amovible.

4. Kit d'affichage selon la revendication 3, dans lequel le premier élément de retenue (4) et/ou le second élément de retenue (11) comprennent au moins un élément magnétique et/ou au moins magnétiquement attractible et/ou dans lequel le second élément de retenue (11) s'étend sensiblement le long de la surface entière du panneau d'exposition (2) ou dans lequel le panneau d'exposition (2) comprend une pluralité de seconds éléments de retenue (11) agencés selon un profil ou une configuration spatial·e prédéfini·e sur ledit panneau d'exposition (2), préférablement alternativement espacés et/ou espacés à intervalles réguliers.

5. Kit d'affichage selon l'une ou plusieurs des revendications précédentes, dans lequel le panneau d'exposition (2) comprend une pluralité d'éléments de marquage (3) agencés à des positions spécifiques sur le panneau d'exposition (2), éventuellement au niveau d'une surface avant du panneau d'exposition (2) et/ou pouvant être visuellement détectés sur la surface avant du panneau d'exposition (2), la pluralité d'éléments de marquage (3) réalisant un profil prédéfini d'aide visuelle aidant à un agencement d'au moins un composant sanitaire hydrothermique (10a-10d) sur le panneau d'exposition (2),
éventuellement dans lequel les éléments de marquage (3) comprennent ou sont au moins une partie des seconds éléments de retenue (11) ou dans lequel les éléments de marquage (3) diffèrent, en particulier diffèrent spatialement, des seconds éléments de retenue (11), ou peuvent être physiquement détachés des seconds éléments de retenue (11).

6. Kit d'affichage selon l'une ou plusieurs des revendications précédentes, comprenant en outre un second dispositif ou module (1') configuré pour loger de manière amovible une pluralité de composants sanitaires hydrothermiques (10a-10d) selon un profil ou une configuration d'affichage prédéfini e, préférablement groupés par catégorie et/ou type, le second module (1') comprenant au moins un panneau amovible (1e) ayant une surface d'affichage au niveau de laquelle au moins l'un de ladite pluralité de composants sanitaires hydrothermiques (10a-10d) est maintenu de manière amovible, et dans lequel :
- le panneau amovible (1e) peut être agencé au moins : dans une première orientation spatiale correspondant à une première configuration du second module (1'), éventuellement dans lequel la surface d'affichage s'étend principalement orthogonalement vis-à-vis d'un axe dans la profondeur dudit second module (1') et de manière frontale par rapport à un utilisateur du second module (1') ; et dans une seconde orientation spatiale tournée, préférablement sensiblement orthogonalement, par rapport à la première orientation spatiale et correspondant à une seconde configuration du second module (1'), éventuellement dans lequel la surface d'affichage s'étend parallèle à l'axe dans la profondeur dudit second module (1'), et/ou dans lequel le panneau amovible (1e) peut être agencé au moins en correspondance d'une première position à une première distance par rapport à une extrémité latérale du second module (1') et en correspondance d'une seconde position à une seconde distance, différente de la première distance, par rapport à l'extrémité latérale du second module (1'), éventuellement par translation,
- et/ou dans lequel le panneau amovible (1e) peut être déplacé dans un mouvement composé comprenant une rotation par rapport à son axe vertical et/ou une translation dans un sens sensiblement orthogonal audit axe vertical.

7. Kit d'affichage selon la revendication 6, comprenant en outre des moyens de retenue (2f, 4, 10p, 11) configurés pour réaliser un raccordement amovible entre le panneau amovible (1e) et les composants sanitaires hydrothermiques (10a-10d),
lesdits moyens de retenue (2f, 4, 10p, 11) étant pourvus d'au moins un second élément de retenue (11) qui est fixé, éventuellement fixé de manière non amovible, ou qui fait partie du, ou qui est réalisé solidaire du, ou qui est le, panneau amovible (1e), le second élément de retenue (11) étant configuré et destiné à interagir avec un composant sanitaire hydrothermique (10a-10d) ou avec au moins un premier élément de retenue (4) accouplé à un composant sanitaire hydrothermique (10a-10d) pour réaliser ledit raccordement amovible.

8. Kit d'affichage selon la revendication 6 ou la revendication 7, dans lequel le second module (1') est un module reposant sur le sol pourvu d'un châssis de support logeant et/ou réalisant au moins un rail (1r) configuré pour permettre le mouvement du panneau (1e) au moins entre la première et la seconde orientation spatiale et/ou au moins entre la première position et la seconde position, et/ou dans lequel le au moins un rail (1r) est configuré pour permettre la rotation du panneau amovible (1e) autour de son axe vertical au moins depuis la première orientation spatiale vers la seconde orientation spatiale.

9. Kit d'affichage selon l'une ou plusieurs des revendications précédentes excluant la revendication 4,
- dans lequel les moyens de retenue (2f, 4, 10p, 11) sont configurés pour réaliser un raccordement type baïonnette, en particulier un raccordement amovible type baïonnette, entre le panneau d'exposition (2) et le composant sanitaire hydrothermique (10a-10d), et dans lequel les moyens de retenue (2f, 4, 10p, 11) comprennent au moins un trou traversant façonné (2f) pratiqué sur ledit panneau d'exposition (2) ; le trou traversant façonné (2f) étant configuré pour s'accoupler, durant l'utilisation, avec une goupille de retenue (10p) agencée au niveau d'une portion, éventuellement une portion arrière, du composant sanitaire hydrothermique (10a-10d),
- ou dans lequel les moyens de retenue (2f, 4, 10p, 11) comprennent au moins une goupille de retenue (10p) agencée sur le panneau d'exposition (2), faisant éventuellement saillie depuis une surface avant du panneau d'exposition (2), la goupille de retenue (10p) étant configurée pour s'accoupler, durant l'utilisation, avec un trou traversant façonné (2f) pratiqué sur une portion, éventuellement une portion arrière, du composant sanitaire hydrothermique (10a-10d),
- ou dans lequel les moyens de retenue (2f, 4, 10p, 11) comprennent au moins une goupille de retenue (10p) agencée sur le panneau d'exposition (2), faisant éventuellement saillie depuis une surface avant du panneau d'exposition (2), la goupille de retenue (10p) étant configurée pour s'accoupler, durant l'utilisation, avec un trou traversant façonné (2f) pratiqué sur un élément de compensation (10t) agencé entre un panneau d'exposition (2) et le composant sanitaire hydrothermique (10a-10d) et configuré pour compenser une distorsion ou déformation ou inclinaison locale dudit panneau d'exposition (2), éventuellement configuré pour compenser la distorsion ou la déformation ou l'inclinaison locale sur un angle de compensation (*α*) prédéterminé, éventuellement dans lequel ledit angle de compensation (*α*) compense au moins partiellement une distorsion ou une déformation ou un angle d'inclinaison (*β*) localement pris·e par le panneau d'exposition (2) dû à un poids et/ou une force de levier exercée au moins localement sur le panneau d'exposition (2) par l'élément sanitaire hydrothermique (10a-10d),
- ou dans lequel les moyens de retenue (2f, 4, 10p, 11) comprennent au moins un trou traversant façonné (2f) pratiqué sur ledit panneau d'exposition (2) ; le trou traversant façonné (2f) étant configuré pour s'accoupler, durant l'utilisation, avec une goupille de retenue (10p) agencée au niveau d'une portion, éventuellement une portion arrière, d'un élément de compensation (10t) agencé entre un panneau d'exposition (2) et le composant sanitaire hydrothermique (10a-10d) et configuré pour compenser une distorsion ou déformation ou inclinaison locale dudit panneau d'exposition (2), éventuellement configuré pour compenser la distorsion ou la déformation ou l'inclinaison locale dudit panneau d'exposition (2) sur un angle de compensation (*α*) prédéterminé, éventuellement dans lequel ledit angle de compensation (*α*) compense au moins partiellement une distorsion ou une déformation ou un angle d'inclinaison (*β*) localement pris·e par le panneau d'exposition (2) dû à un poids et/ou une force de levier exercée au moins localement sur le panneau d'exposition (2) par l'élément sanitaire hydrothermique (10a-10d).

10. Utilisation d'un kit d'affichage selon l'une ou plusieurs des revendications précédentes pour agencer une pluralité de composants sanitaires hydrothermiques (10a-10d) sur le panneau d'exposition (2) selon au moins l'un d'un profil ou d'une configuration spatial·e défini·e par l'utilisateur et pouvant être redéfini e, simulant une installation réelle desdits composants sanitaires hydrothermiques (10a-10d) dans un environnement de travail, tel qu'une salle de bain ou similaire.

11. Procédé d'affichage de composants sanitaires hydrothermiques (10a-10d) avec un kit d'affichage selon l'une ou plusieurs des revendications précédentes 1 à 9,
le procédé comprenant au moins une étape d'engagement amovible d'au moins un composant sanitaire hydrothermique (10a-10d) avec un panneau d'exposition (2) d'un premier module (1) d'un système d'affichage (1, 1') par des moyens de retenue (2f, 4, 10p, 11) comprenant un premier élément de retenue (4) respectif configuré et destiné à être engagé de manière non amovible vis-à-vis d'un composant sanitaire hydrothermique (10a-10d) respectif, dans lequel les moyens de retenue (2f, 4, 10p, 11) sont configurés pour réaliser un raccordement amovible entre le panneau d'exposition (2) et les composants sanitaires hydrothermiques (10a-10d), dans lequel le panneau d'exposition (2) est spécifiquement destiné et configuré pour supporter une pluralité de composants sanitaires hydrothermiques (10a-10d), et comprend une surface avant spécifiquement configurée et destinée à entrer en contact et interagir directement avec au moins une partie du premier élément de retenue pour réaliser ledit raccordement amovible ; et
dans lequel l'étape d'engagement amovible, lorsque les composants sanitaires hydrothermiques (10a-10d) sont engagés de manière amovible avec le panneau d'exposition (2), détermine un profil ou une configuration spatial·e des composants sanitaires hydrothermiques (10a-10d) sur le panneau d'exposition (2) défini·e par l'utilisateur et pouvant être redéfini·e simulant une installation réelle desdits composants sanitaires hydrothermiques (10a-10d) dans un environnement de travail, tel qu'une salle de bain ou similaire.

12. Procédé selon la revendication 11, dans lequel l'étape d'engagement amovible comprend l'accouplement magnétiquement d'au moins l'un desdits composants sanitaires hydrothermiques (10a-10d) au niveau d'une face avant du panneau d'exposition (2), éventuellement en accouplant un élément de retenue (4) magnétique agencé sur une surface arrière dudit composant sanitaire hydrothermique (10a-10d) avec la face avant du panneau d'exposition (2), ou comprend un accouplement magnétiquement d'au moins l'un desdits composants sanitaires hydrothermiques (10a-10d) à une face magnétique du panneau d'exposition (2) ou à un élément de retenue magnétique (11) agencé au niveau du panneau d'exposition (2) ou comprend l'accouplement mécaniquement d'au moins l'un desdits composants sanitaires hydrothermiques (10a-10d) à une face avant du panneau d'exposition (2) par au moins un élément d'accrochage (4) agencé sur la face avant du panneau d'exposition (2).

13. Procédé selon les revendications 11 ou 12, dans lequel l'étape d'engagement amovible comprend l'agencement et le réagencement de manière répétée de multiples fois du profil ou de la configuration spatial·e des composants sanitaires hydrothermiques (10a-10d) sur le panneau d'exposition et/ou dans lequel l'étape d'engagement amovible comprend l'engagement d'au moins un composant sanitaire hydrothermique (10a-10d) avec le panneau d'exposition (2) du premier module (1), le système d'affichage (1, 1') en relation avec, ou par rapport à, une pluralité d'éléments de marquage (3) agencés à des positions spécifiques sur le panneau d'exposition (2), éventuellement au niveau d'une surface avant du panneau d'exposition (2) et/ou pouvant être visuellement détectés sur la surface avant du panneau d'exposition (2), la pluralité d'éléments de marquage (3) réalisant un profil prédéfini d'aide visuelle aidant à un agencement d'au moins un composant sanitaire hydrothermique (10a-10d) sur le panneau d'exposition (2).

14. Procédé selon l'une ou plusieurs des revendications 11 à 13, comprenant en outre une étape de sélection d'au moins un composant sanitaire hydrothermique (10a-10d) à partir d'un second module (1') d'un système d'affichage (1, 1'), l'étape de sélection ayant lieu avant l'étape d'engagement amovible,
dans lequel l'étape de sélection comprend au moins l'une des étapes suivantes :
- déplacement d'au moins un panneau amovible (1e) du second module (1'), dans lequel le panneau amovible (1e) comprend une surface d'affichage au niveau de laquelle au moins un composant sanitaire hydrothermique (10a-10d) est engagé de manière amovible, entre une première orientation spatiale correspondant à une première configuration du second module (1'), éventuellement dans lequel la surface d'affichage s'étend principalement orthogonalement vis-à-vis d'un axe dans la profondeur dudit second module (1') et de manière frontale par rapport à un utilisateur du second module (1'), et une seconde orientation spatiale tournée, préférablement sensiblement orthogonalement, par rapport à la première orientation spatiale et correspondant à une seconde configuration du second module (1'), éventuellement dans lequel la surface d'affichage s'étend parallèle à l'axe dans la profondeur dudit second module (1'), et/ou
- comprend le déplacement d'au moins un panneau amovible (1e) du second module (1') entre une première position à une première distance par rapport à une extrémité latérale du second module (1') et une seconde position à une seconde distance, différente de la première distance, par rapport à l'extrémité latérale du second module (1'), éventuellement par translation, et/ou
- comprend le déplacement d'au moins un panneau amovible (1e) du second module (1') en lui faisant effectuer un mouvement composé comprenant par rapport à son axe vertical et/ou une translation dans un sens sensiblement orthogonal audit axe vertical.
